(19) Europäisches Patentamt
European Patent Office
Office européen des brevets

(11) EP 1 486 873 A1

(12) # EUROPEAN PATENT APPLICATION
published in accordance with Art. 158(3) EPC

(43) Date of publication:
**15.12.2004 Bulletin 2004/51**

(21) Application number: **03700471.0**

(22) Date of filing: **08.01.2003**

(51) Int Cl.[7]: **G06F 12/00**, G11B 27/10, G11B 27/00, H04N 5/91, H04N 5/93

(86) International application number:
**PCT/JP2003/000054**

(87) International publication number:
**WO 2003/079195 (25.09.2003 Gazette 2003/39)**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **19.03.2002 JP 2002076580**

(71) Applicant: **Sony Corporation**
**Tokyo 141-0001 (JP)**

(72) Inventor: **SEO, Minoru, c/o SONY CORPORATION**
**Tokyo 141-0001 (JP)**

(74) Representative: **DeVile, Jonathan Mark, Dr. et al**
**D Young & Co**
**120 Holborn**
**London EC1N 2DY (GB)**

(54) **INFORMATION PROCESSING APPARATUS AND METHOD**

(57) The present invention is associated with an information processing apparatus and method adapted to enhance the reproduction speed in fast-forward reproduction for example and provide a stable reproducing operation. A file information read unit 106 acquires FAT tables based on cluster written with the cluster numbers of next data for AV files stored in a PC card type HDD 103, sorts the acquired FAT tables in a predetermined sequence, generates conversion tables in unit of one AV file on the basis of the sorted FAT tables, and stores the generated tables in a RAM 108. In the reproduction of a predetermined AV file, a file read unit 107 reads the AV file from a PC card type HDD 103 on the basis of these conversion tables and outputs this AV file to an output unit 111 via a decoder unit 110. The present invention is applicable to personal computers and household electric appliances.

FIG. 8

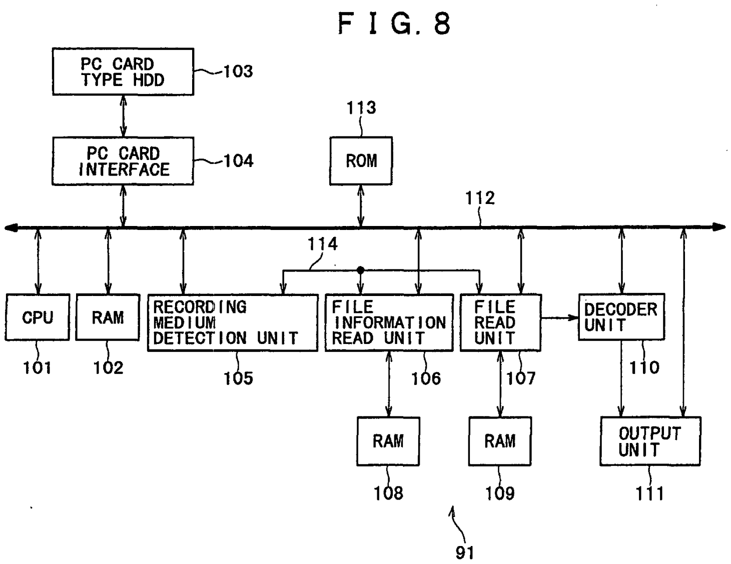


EP 1 486 873 A1

## Description

Technical Field

The present invention relates generally to an information processing apparatus and method adapted to enhance the reproduction speed in a fast-forward operation and so on and provide a stable reproducing operation.

Background Art

Information processing equipment including personal computers (hereafter referred to as PCs) has recording media such as hard disk drives (hereafter referred to as HDDs) for storing large-scale application software and data. These random-access recording media have been drawing attention as recording media for AV (Audio and Visual) files due to the recent significant progress in data storage capacity and transfer rate.

Further, the recent progress in image compression technologies is lowering the average data rate necessary for data recording. For example, according to the MPEG2 (Moving Picture Expert Group Phase 2) standard used in PCs and HDD recorders, moving images of a sufficient quality are recorded or reproduced at an average data rate of approximate 8 Mbps. In the MPEG4 standard assumed to be used in the future in PCs and so on, high-quality moving images would be able to be recorded or reproduced at still lower average data rates.

As a result, while only particular household electric appliances (for example, video tape recorders) are conventionally capable of AV reproduction or recording, this has become also practicable with various information apparatus such as PCs.

When an AV file (or other files) is recorded by an operating system (hereafter referred to as an OS) such as Windows (trademark) installed on each PC, the AV file is discretely recorded on a recording medium in units of a cluster which is made up of a predetermined number of data sectors (storage areas on a packet basis). In other words, each AV file is recorded on a recording medium in accordance with a file system, a file allocation table (hereafter referred to as a FAT) for example, used by the OS.

When a file recorded to a recording medium in accordance with the FAT is read by a PC for example, this PC reads the file name, size, and start cluster number of the file from the directory entry in which the file is outlined and references the data sequence in the file from FAT entry corresponding to the start cluster number to sequentially read the data in the cluster concerned. Consequently, the PC can handle a plurality of pieces of data recorded discretely in a plurality of clusters as one file.

FIGS. 1 through 5 illustrate an exemplary structure of the FAT of Windows(R) OS.

As shown in FIG. 1, a recording medium 1 such as a HDD with a file recorded by use of the FAT records, from its head, a reserved area 11 describing the information about the recording medium 1 in its entirety, a FAT area 12 describing a file cluster sequence, a root directory area 13 describing the information (hereafter referred to file information) about a file or a directory included in the top directory of the files and directories recorded in a data area 14 and the data area 14 describing actual data of the file, in this order.

As shown in FIG. 2, the reserved area 11 records a BIOS Parameter Block (hereafter referred to as BPB) 11-1 in a 64-byte area from the start, describing the information about the recording medium 1 and a signature (sig) 11-2 indicative of a FAT file system in 2 bytes, byte 511 and byte 512.

As shown in FIG. 3, the FAT area 12 records n tables (n being the total number of clusters formed in the data area 14) 21-k (k being a given integer in 1 to n).

It should be noted that tables 21-k are also referred to as FAT[k]21-k. It should also be noted that, each of the tables 21-k need not be distinguished from each other, they are also generically referred to as a table 12. This holds true with other areas and tables.

The value described in this FAT[k]21-k (hereafter simply referred to as the value of FAT[k]) is indicative of the cluster number of the cluster recording the data next to the data recorded in the cluster (cluster number = "k") corresponding to FAT[k] in the data area 14 (FIG. 5). For example, if the value of FAT[k] corresponding to a predetermined first data is "3", then second data next to this first data are recorded in the cluster whose cluster number is "3" in the data area 14.

As shown in FIG. 4, the root directory area 13 records the predetermined information about all the directories and files in the top layer of each directory of directories and files recorded on the recording medium 1. For example, if N (N being any integer) files are recorded in the directory on the top layer of the recording medium 1, file information 31-1 through 31-N each recording the information about each of these files are formed in the root directory area 13. Each of the file information 31-1 through 31-N describes the name of the file, the creation date of the file, the size of the file, and the start cluster number of the file.

As shown in FIG. 5, the data area 14 records the data in each file over (or in a divided manner) a plurality (in this example, n for example as described above) of clusters 42-m (m being any integer from 0 to n-1) in unit of cluster 42 made up of the predetermined number (6 in the example of FIG. 5) of sectors 41 which is preset. Namely, the data recorded in the data area 14 are managed on a cluster 42 basis. Each of the cluster 42-m is attached with a number for distinguishing this cluster from another, namely, a cluster number. In this example, it is assumed that cluster numbers are allocated sequentially from the left to the right as shown in FIG. 5. Namely, the cluster number of cluster 42-m is "m".

The following briefly describes the processing of reproducing an AV file recorded to the recording medium 1 shown in FIG. 1.

For the brevity of description, it is assumed that data for one scene be recorded in one cluster 42-m (FIG. 5).

First, the PC determines whether or not the value described in the signature in the reserved area 11 (FIG. 2) is the value of the signature of the FAT.

If the value described in the signature 11-2 is found to be the value of the signature of the FAT, then the PC analyzes the contents described in the BPB 11-1 in the reserved area 11.

As mentioned above, the BPB 11-1 describes the number of bytes per sector, the number of sectors per cluster, the number of sectors in the entire recording medium, and the number of sectors in use by the FAT area 12. The PC detects these pieces of information as well as the type of the FAT and the start position of the root directory area 13.

Next, the PC reads the file information 31-1 through 31-N from the root directory area 13 shown in FIG. 4 and obtains the structures of the files and directories recorded on the recording medium 1, the file size of each file, and the start cluster number of each file.

Then, if the starting of reproduction of a predetermined AV file is instructed by the user, the PC detects the start cluster number of the file from the file information 31-m (FIG. 4) of the indicated AV file and issues a command to access the FAT area 12 (FIG. 3) of the recording medium 1.

For example, if the start cluster number is "0", then the PC reproduces the data (one scene) recorded in the cluster 42-0 (FIG. 5) and gets the value of FAT[0] (FIG. 3) from the FAT area 12.

For example, if the value of FAT[0] is "2", it indicates that the data of a next scene are recorded to the cluster 42-2 (FIG. 5) having cluster number 2, so that the PC reproduces the data (next one scene) recorded to the cluster 42-2 and gets the value of FAT[2] (FIG. 3) from the FAT area 12 to search for the recording position of the data of a still next scene.

Repeating the above-mentioned processing, the PC reads the AV file (all scenes) indicated by the user and reproduces all scenes.

In this case (normal-speed reproduction), if the execution interface speed between the recording medium 1 and the PC is enough for satisfying the bit rate of the image and audio signals recorded in the AV file, realtime reproduction is practicable.

However, in the case of special reproduction operations as typified by fast-forward reproduction, even if the speed of the execution interface between the recording medium 1 and the PC is enough for satisfying the bit rate of the image and audio signals recorded to the AV file, an overhead is caused in the above-mentioned search processing of FAT[k] (FIG. 3), thereby presenting a problem of making it difficult to enhance the reproduction speed at the time of fast-forward reproduction.

Especially, in the case of fast-backward reproduction, the number of times FAT[k] search executed increases for identifying the recorded position of the data of each scene to be reproduced next to result in an increased processing overhead, thereby presenting a problem of making it difficult to enhance the reproduction speed.

To be more specific, in executing the fast-forward reproduction, the PC skips the predetermined number of scenes to read the target scene (to be reproduced next) and reproduce this scene, unlike the reproduction of normal speed in which all scenes are sequentially read and reproduced.

For example, if the scene currently being reproduced is the data of cluster of cluster number "03", the value of FAT[03] corresponding to the cluster of cluster number "03" is "04" as shown in FIG. 6, so that the data of the next scene are recorded in the cluster of cluster number "04".

Consequently, in the reproduction of normal speed, the PC may read the data of the cluster of cluster number "04" as the scene to be reproduced next. As a result, the search for FAT[k] 21 may be executed only once.

On the contrary, if the scene to be reproduced next is a scene beyond 3 scenes (namely, the fourth scene from the currently reproduced scene), the PC first gets value "04" of FAT[03] to detect that the next scene is the data of the cluster of cluster number "04" as shown in FIG. 6.

Next, the PC gets value "05" of FAT[04] corresponding to the cluster of cluster number "04" to detect that the next scene (the second scene from the currently reproduced scene) is the data of the cluster of cluster number "05".

Further, the PC gets value [08] of FAT[05] corresponding to the cluster of cluster number "05" to detect that the next scene (the third scene from the currently reproduced scene) is the data of the cluster of cluster number [08].

Still further, the PC gets value [0B] of FAT[08] corresponding to the cluster of cluster number [08] to detect that the next scene (the fourth scene from the currently reproduced scene) is the data of the cluster of cluster number [0B].

Thus, the PC detects the recording position (the cluster number) at which the data of the scene to be reproduced next (the fourth scene from the currently reproduced scene) are recorded.

Therefore, in fast-forward reproduction, the PC must execute the search and analysis of FAT[k] by the number of times equal to the number of skipped scenes. Consequently, as the number of skipped scenes increases, the number of times the FAT[k] search is executed increases.

In not only the execution processing speed of the table search processing but also the search processing under the conditions of table search over a plurality of sectors or a plurality of clusters, the processing of reading a table recorded at a position different from the cluster or sector including the target table occurs. The occurrence of this processing increases the overheads of the seek time (the time in which a physical read position moves on the recording medium) of the recording medium that occurs in this read processing and the table read time. In addition, the seek time which occurs at starting the reading of the data of the cluster having the number detected in the table search also causes the overhead of the processing.

For these reasons, the conventional configurations make it difficult to enhance the reproduction speed in fast-forward reproduction.

In the case of fast-backward reproduction, the PC, in order to detect the recording position of the data of the scene to be reproduced next, must determine which value of FAT[v] (v being an integer other than k) matches the table number k of target FAT[k] in the FAT area 12 (FIG. 3).

To be more specific, assume for example that the data of the scene currently reproduced be the data recorded in the cluster having cluster number [09] and the scene to be reproduced next be the scene which is one before the last (the scene to be reproduced by skipping the scene immediately before).

In this example, as shown in FIG. 7, the table number of FAT[09] corresponding to the cluster of cluster number [09] is [09], so that the PC first searches for table 21 with value 22 being [09] as indicated dashed line 31. In the example shown in FIG. 7, the PC gets FAT[0B].

Further, as indicated by dashed line 32, the PC searches for the table in which value 22 matching table number [0B] of the retrieved FAT[0B] is written. In the example shown in FIG. 7, the PC gets FAT[08]. Consequently, the PC detects that the data of the scene to be reproduced next (the scene before the one immediately before the currently reproduced scene) are the data recorded in the cluster (cluster number [08]) corresponding to FAT[08].

In the above-mentioned example, the number of scenes to be skipped is one, so that the number of times the table search processing (the processing indicated by dashed lines) is two. As the number of scenes to be skipped increases, the number of times the table search processing executed also increases.

In addition, in one table search processing operation, the PC must analyze each FAT[k] one by one until the desired table 21 is encountered.

Thus, in executing special reproduction operations as typified by fast-backward reproduction, the PC executes the above-mentioned table search processing, in which the number of times the search processing is executed increases in proportion to the number of times scene skip is executed, thereby making it difficult to enhance the reproduction speed in fast-forward reproduction.

Disclosure of Invention

It is therefore an object of the present invention to enhance the reproduction speed in fast-forward reproduction for example and provide the stable reproduction processing.

In carrying out the invention and according to one aspect thereof, there is provided an information processing apparatus comprising: access control means for controlling access to the recording medium; acquisition means for acquiring a plurality of first file information for each of the plurality of recording units including information indicative of a sequence of data written in the file, the plurality of first file information being recorded to the recording medium, the access to which being controlled by the access control means; generating means for sorting, in a predetermined sequence, the plurality of first file information acquired by the acquisition means and generating second file information in unit of the file on the basis of each of the plurality of sorted first file information; and output means for outputting the file corresponding to the second file information recorded to the recording medium, the access to which being controlled by the access control means, on the basis of the second file information generated by the generating means.

In the information processing apparatus, the file may be an AV file.

The above-mentioned generating means generates the second file information when the information processing apparatus is driven.

When a predetermined file is selected from among a plurality of the files recording to the recording medium, the generating means generates the second file information corresponding to the selected file.

The above-mentioned information processing apparatus further comprises storage means for storing the second file information.

The above-mentioned information processing apparatus still further comprises recording control means for recording the second file information to the recording medium in which the file corresponding to the second file information is recorded.

The above-mentioned output means, when outputting, relative to a first recording unit being currently outputted, by skipping one or more recording units, a second recording unit positioned after or before the first recording unit, determines whether or not the second recording unit exists at a second position resulted from executing a scan equivalent to a first data amount and, if the second recording unit is not found at the second position, determines whether or not the second recording unit exists at a third position resulted from executing a scan equivalent to a second data amount relative to the second position.

The above-mentioned output means sets the first data amount to an arbitrary value.

In carrying out the invention and according to another aspect thereof, there is provided an information processing method for an information processing apparatus for outputting a file recorded over a plurality of recording units in a recording medium, comprising the steps of: controlling access to the recording medium; acquiring a plurality of first file information for each of the plurality of recording units including information indicative of a sequence of data written in the file, the plurality of first file information being recorded to the recording medium, the access to which being controlled in the access control step; sorting, in a predetermined sequence, the plurality of first file information acquired in the acquisition step and generating second file information in unit of the file on the basis of each of the plurality of sorted first file information; and outputting the file corresponding to the second file information recorded to the recording medium, the access to which being controlled in the access control step, on the basis of the second file information generated in the generating step.

In carrying out the invention and according to still another aspect thereof, there is provided a recording medium recording a computer-readable program, comprising the steps of: controlling access to the recording medium; acquiring a plurality of first file information for each of the plurality of recording units including information indicative of a sequence of data written in the file, the plurality of first file information being recorded to the recording medium, the access to which being controlled in the access control step; sorting, in a predetermined sequence, the plurality of first file information acquired in the acquisition step and generating second file information in unit of the file on the basis of each of the plurality of sorted first file information; and outputting the file corresponding to the second file information recorded to the recording medium, the access to which being controlled in the access control step, on the basis of the second file information generated in the generating step.

In carrying out the invention and according to yet another aspect thereof, there is provided a program for making a computer execute the steps of: controlling access to the recording medium; acquiring a plurality of first file information for each of the plurality of recording units including information indicative of a sequence of data written in the file, the plurality of first file information being recorded to the recording medium, the access to which being controlled in the access control step; sorting, in a predetermined sequence, the plurality of first file information acquired in the acquisition step and generating second file information in unit of the file on the basis of each of the plurality of sorted first file information; and outputting the file corresponding to the second file information recorded to the recording medium, the access to which being controlled in the access control step, on the basis of the second file information generated in the generating step.

In the information processing apparatus and method, recording medium, and program according to the present invention, a plurality of first file information for each recording unit recorded to a recording medium recording a file over a plurality of recording units, the first file information including information indicative of a sequence of data written in the file, is acquired, the acquired plurality of first file information are sorted in a predetermined sequence, and second file information is generated on the basis of each of the plurality of sorted first file information. In the file output from the recording medium, a file corresponding to the second file information is outputted on the basis of the generated second file information.

The information processing apparatus may be a personal computer, a household electric appliance or the like, which is capable of outputting files.

## Brief Description of Drawings

FIG. 1 illustrates an exemplary configuration of the logical structure of a recording medium on which a FAT file is recorded.

FIG. 2 illustrates an exemplary configuration of a reserved area of the recording medium shown in FIG. 1.

FIG. 3 illustrates an exemplary configuration of a FAT area of the recording medium shown in FIG. 1.

FIG. 4 illustrates an exemplary configuration of a root directory area of the recording medium shown in FIG. 1.

FIG. 5 illustrates an exemplary configuration of a data area of the recording medium shown in FIG. 1.

FIG. 6 illustrates an exemplary configuration of a FAT area for describing the conventional fast-forward reproduction.

FIG. 7 illustrates an exemplary configuration of a FAT area for describing the conventional fast-backward reproduction.

FIG. 8 is a unit diagram illustrating an exemplary configuration of an AV file reproducing apparatus to which the present invention is applied.

FIG. 9 is a flowchart describing an example of the reproduction processing of the AV file reproducing apparatus shown in FIG. 8.

FIG. 10 is a flowchart describing an example of the file information acquisition processing of the reproduction processing shown in FIG. 9.

FIG. 11 illustrates an exemplary configuration of a FAT area in a recording medium with an AV file recorded.

FIG. 12 illustrates an exemplary configuration of a conversion table generated by the AV file reproducing apparatus shown in FIG. 9 on the basis of the FAT area shown in FIG. 11.

FIG. 13 is a flowchart describing an example of the FAT information acquisition and analysis processing of the reproduction processing shown in FIG. 9.

FIG. 14 illustrates an exemplary configuration of a picture with GOP = 15.

FIG. 15 illustrates an exemplary configuration of recording area in a RAM used by a file read unit of the AV file reproducing apparatus shown in FIG. 8.

FIG. 16 illustrates an exemplary timing chart indicative of the synchronous reproduction by the AV file reproducing apparatus shown in FIG. 8.

FIG. 17 is a flowchart describing an example of the fast-forward reproduction processing of the AV file reproducing apparatus shown in FIG. 8.

FIG. 18 is a flowchart describing the example of the fast-forward reproduction processing of the AV file reproducing apparatus shown in FIG. 8.

FIG. 19 is a flowchart describing an example of the fast-backward reproduction processing of the AV file reproducing apparatus shown in FIG. 8.

FIG. 20 is a flowchart describing the example of the fast-backward reproduction processing of the AV file reproducing apparatus shown in FIG. 8.

FIG. 21 is a flowchart describing another example of reproduction processing of the AV file reproducing apparatus shown in FIG. 8.

FIG. 22 is a unit diagram illustrating another exemplary configuration of an AV file reproducing apparatus to which the present invention is applied.

FIG. 23 is a flowchart describing an example of the reproduction processing of the AV file reproducing apparatus shown in FIG. 22.

FIG. 24 is a flowchart describing the example of the reproduction processing of the AV file reproducing apparatus shown in FIG. 22.

FIG. 25 is a flowchart describing an example of processing for analyzing FAT information and writing a conversion table to a recording medium in the reproduction processing shown in FIG. 24.

FIG. 26 is a flowchart describing an example of the creation and write-back processing in unit of Sb (Byte) of the conversion table of the mb-th file in the processing of analyzing FAT information and writing a conversion table to a recording medium in the reproduction processing shown in FIG. 25.

Best Mode for Carrying Out the Invention

Now, referring to FIG. 8, there is shown an exemplary configuration of an AV file reproducing apparatus as an information processing apparatus to which the present invention is applied.

In an AV file reproducing apparatus 91 shown in FIG. 8, a CPU (Central Processing Unit) 101 executes various processing operations as instructed by a program stored in a ROM (Read Only Memory) 113 or a program loaded in a PC (Personal computer) card type HDD (Hard Disk Drive) 103. A ROM (Random Access Memory) 102 appropriately stores the data necessary for the CPU 101 to execute various processing operations.

The CPU 101, the ROM 113, and the RAM 102 are interconnected via a bus 112. The bus 112 is also connected to a PC card interface 104 through which the PC card type HDD 103 is loaded, a recording medium detection unit 105, a file information read unit 106, a file read unit 107, a decoder unit 110, and an output unit 111 composed of a display device and a sound outputting speaker.

The recording medium detection unit 105, the file information read unit 106, and the file read unit 107 are interconnected via a bus 114.

The PC card type HDD 103, upon being loaded in the PC card interface 104, becomes usable as a recording medium for the AV file reproducing apparatus 91. The data (including programs) to be recorded on the PC card type HDD 103 are not limited to any particular data; in the present example, AV files are recorded on the PC card type HDD 103.

The PC card interface 104 generates signals compliant with the PC card standard, supplies the data received from the bus 112 to be stored in the PC card type HDD 103 to the PC card type HDD 103, and supplies the data read from the PC card type HDD 103 to the bus 112.

The interface of the PC card interface 104 is, but not exclusively, the PC card interface compliant with the PC card standard specified in PCMCIA (Personal Computer Memory Card International Association)/JEIDA (Japan Electronic Industry Development Association), the CF+ interface and Compact Flash interface specified in Compact Flash Association, or the interface compliant with the ATA (AT-Attachment) interface standard formulated by ANSI (American National Standards Institute).

Therefore, in addition to the PC card type HDD 103, the PC card interface 104 accepts any PC cards compliant with any one of the above-mentioned interface standards.

The recording medium detection unit 105 identifies the PC card type HDD 103 loaded in the PC card interface 104 under the control of the CPU 101 and detects a file system used in the PC card type HDD 103.

The file information read unit 106 reads file information 13 (FIG. 4) from the PC card type HDD 103 via the PC card interface 104 and stores the file information in the RAM 108 under the control of the CPU 101.

It should be noted that the FAT system formed on the PC card type HDD 103 is the same as the related-art counterpart, so that FIGS. 1 through 5 are referenced also in the present embodiment as required.

The file information read unit 106 reads the FAT information (the information associated with FAT[k] (FIG. 3)) from the PC card type HDD 103 via the PC card interface 104, converts this FAT information into a table (a table 131 as shown in FIG. 12 to be described later) indicative of the arrangement of clusters of each file, and stores the table into the RAM 108. This table is referred to as a conversion table.

The file read unit 107 reads the data (the data recorded in the data area 14 shown in FIG. 5) of an AV file from the PC card type HDD 103 via the PC card interface 104 and stores the data into a RAM 109 under the control of the CPU 101. The data are stored (held) in the RAM 109 until they get ready for transfer to the decoder unit 110. In other words, when the data become ready for transfer to the decoder unit 110, the file read unit 107 reads the data from the RAM 109 and supplies them to the decoder unit 110.

The decoder unit 110 decodes the data sequentially supplied from the file read unit 107 and transfers the decoded data to the output unit 111 under the control of the CPU 101.

The output unit 111 outputs (in the case of image data, an image is displayed by the display device and, in the case of audio data, a sound is outputted from the speaker) the data supplied from the decoder unit 110 under the control of the CPU 101.

The following describes the normal-speed reproduction processing of the AV file reproducing apparatus 91 with reference to the flowchart shown in FIG. 9.

In step S1, the recording medium detection unit 105 shown in FIG. 8 determines whether or not a PC card has been loaded in the PC card interface 104. If the PC card is found not loaded, the recording medium detection unit 105 returns the processing to step S1 to determine whether or not the PC card has been loaded again. Namely, the recording medium detection unit 105 puts this processing in a wait state until a PC card is loaded in the PC card interface 104.

If the user has loaded the PC card type HDD 103 into the PC card interface 104, the PC card interface 104 detects the loading and notifies the recording medium detection unit 105 thereof via the bus 112.

At this moment, the recording medium detection unit 105, receiving the notification from the PC card interface 104, determines that the PC card has been loaded in step S1, identifies the card type of the card loaded in the PC card interface 104 in step S2, and, on the basis of the result of the identification, determines whether or not the card is compatible with the AV file reproducing apparatus 91.

To be more specific, the recording medium detection unit 105 starts an access operation for obtaining the card information from the PC card (in this example, the PC card type HDD 103) via the PC card interface 104.

Then, the recording medium detection unit 105, by following command issued by the PC card interface 104, gets the data for identifying the card type from the PC card type HDD 103 via the PC card interface 104.

To be more specific, the recording medium detection unit 105 analyzes the value of a register in the PC card type HDD 103 specified in the PC card standard to determine whether or not the type of the PC card type HDD 103 is a compatible card. Therefore, in this example, the recording medium detection unit 105 instructs the PC card type HDD 103 to read the register in this card.

If the recording medium detection unit 105 determines in step S3 that the card is not a compatible card, then this processing exits; if the card is found compatible, the recording medium detection unit 105 analyzes the logical format in step S4.

To be more specific, the recording medium detection unit 105 instructs the PC card type HDD 103 to execute detection processing and notifies the PC card type HDD 103 of the number and length of a sector to be read via the PC card interface 104. Consequently, the specified sector is read from the PC card type HDD 103 and supplied to the recording medium detection unit 105 via the PC card interface 104.

For example, if the above-mentioned FAT is used for the PC card type HDD 103, the recording medium detection unit 105 issues a request for reading data of the first sector to the PC card type HDD 103 to access the PC card type HDD 103 via the PC card interface 104.

When signature 11-2 of the FAT of this start sector (the reserved area 11 shown in FIG. 2) is supplied from the PC card type HDD 103 via the PC card interface 104, the recording medium detection unit 105 analyzes the received signature 11-2 to detect that the logical format used in the PC card type HDD 103 is the FAT.

Because a cluster size, the size of the FAT area 12, and so on are described in the BPB 11-1 of the first sector (the reserved area 11 shown in FIG. 2), the recording medium detection unit 105 stores these items of information into the RAM 102 and, at the same time, accumulates them into itself.

In step S5, the recording medium detection unit 105 determines whether or not the logical format of the PC card type HDD 103 is a compatible logical format.

If the logical format is found not compatible (the logical format of the PC card type HDD 103 is other than the FAT) in step S5, then the recording medium detection unit 105 issues a request to the PC card type HDD 103 for stopping this processing to end it.

If the logical format of the PC card type HDD 103 is found compatible (the logical format of the PC card type HDD 103 is the FAT), then the recording medium detection unit 105 notifies the file information read unit 106 thereof to make it execute the processing of obtaining the file information 31-1 through 31-N (FIG. 4) from the PC card type HDD 103.

To be more specific, the file information read unit 106 requests the PC card type HDD 103 via the PC card interface 104 to access the root directory area 13 (FIG. 4). The PC card type HDD 103 executes the processing of reading data from the root directory area 13.

The information read at this time includes the file information 31-1 through 31-N (the information including directory name or file name, file size, and file's start cluster) recorded in the root directory area 13, which are supplied to the file information read unit 106 via the PC card interface 104. The file information read unit 106 stores the supplied information into the dedicated RAM 108.

It should be noted that, in this example, the processing in step S6 (the processing of getting the file information 31 from the PC card type HDD 103) is referred to as "file information acquisition processing".

The details of the "file information acquisition processing" in this example is detailed in FIG. 10. The following describes "file information acquisition processing" in this example with reference to FIG. 10.

First, in step S31, the file information read unit 106 detects the root directory position (the position of the root directory area 13 in the PC card type HDD 103) from the recording medium detection unit 105. It should be noted that, in this example, in the detected root directory area 13, the start sector = Ss and the end sector = Se.

In step S32, the file information read unit 106 detects size q of one piece of file information 31 (FIG. 4), detects sector size s of the root directory 13 in step S33, and sets read-in sector p in step S34. In this example, sector P = start sector Ss.

It should be noted that, because the FAT is used in this example, size q of one piece of information 31 is 32 bytes and, because the HDD is used, sector size s is 512 bytes.

In step S35, the file information read unit 106 reads sector p set in the processing of step S34 from the PC card type HDD 103 via the PC card interface 104.

In step S36, the file information read unit 106 initializes read information count r within one sector. In this example, read information count r is initialized to r = 1.

In step S37, the file information read unit 106 accumulates the data read by the processing of step s35 (stores into the RAM 108).

In step S38, the file information read unit 106 reads one piece of file information 31 (FIG. 3). In step S39, the file information read unit 106 sets read information count r = r + 1. In step S40, the file information read unit 106 determines whether or not

sector size s < (information size q) * (read information count r).

If s < q * r is not determined in step S40, then the procedure returns to step S38 to repeat the above-mentioned processing therefrom. Namely, the processing operations of steps S38 through S40 are repeatedly executed for the contents of all pieces of file information 31 included in sector p read by the processing of step S35 immediately before and the data is stored in the RAM 108.

When all pieces of information 31 included in sector p have been read, then it is determined that

$$s < q * r$$

upon which the file information read unit 106 sets sector p = p + 1 in step S41. In step S42, the file information read unit 106 determines whether or not

$$\text{sector } p < \text{end sector } Se.$$

If the file information read unit 106 determines in step S42 that p is not

$$p < Se,$$

then returns this processing to step S35 to repeat the above-mentioned processing therefrom. Namely, the processing operations of steps S35 through S41 are repeated until sector p exceeds end sector Se. Consequently, all pieces of information 31-1 through 31-11 in the root directory area 13 are read.

Referring to FIG. 9 again, the above-mentioned processing operations of steps S1 through S6 are the initial sequence to be executed immediately after the loading of the PC card type HDD 103 on the PC card interface 104 and the file reproducing operation to be executed thereafter is executed when the user performs a file specification, for example. To be more specific, in this example, each piece of information included in the file information 31 accumulated in the RAM 108 is displayed on the output unit 111 (the display device) as a file list and the user selects desired files from the displayed file list.

Thus, with the file list displayed on the display device, the file read unit 107 determines in step S7 whether or not a file has been selected. If no file has been selected, the file read unit 107 returns this processing to step S7 to determine again whether or not a file has been selected. Namely, the file read unit 107 always determines whether a file has been selected or not

For example, if a file to be reproduced (hereafter referred to as a reproduction file) has now been selected by the user, then the file read unit 107 determines in step S7 that a file has been selected and the file information read unit 106 in step S8 issues a request to the PC card type HDD 103 via the PC card interface 104 for reading FAT[k] 21-k (k being the start cluster number of the reproduction file obtained by the processing of step S6) through FAT[r] 21-r (r being the end cluster number of the reproduction file).

Then, the file information read unit 106 analyzes the tables of start FAT[k] 21-k through end FAT[r] 21-r of the reproduction file read from the PC card type HDD 103.

For example, if the area corresponding to the reproduction file in the FAT area 12 is configured as shown in FIG. 11, then the file information read unit 106 analyzes FAT[03] 21-3 through FAT[05] 21-5, FAT[08] 21-8, FAT[9] 21-9, and FAT[0B] 21-0B.

In addition, the file information read unit 106 sorts the values (03, 04, 05, 08, 09, and 0B) of FAT[03] 21-3 through FAT[05] 21-5, FAT[08] 21-8, FAT[9] 21-9, and FAT[0B] 21-0B in a predetermined sequence (in the sequence of reproduction (03, 04, 05, 08, 0B, 09)) to generate a conversion table 131 having a structure as shown in FIG. 12.

Thereafter, in step S9, the file read unit 107 reproduces the file on the basis of this generated conversion table 131.

To be more specific, the file read unit 107 executes reproduction processing by not using FAT[k] in the FAT area 12 (FIG. 11) recorded to the PC card type HDD 103 but by using the tables (hereafter referred to as cluster tables) 151 through 156 re-generated in an area 144 of the conversion table 131. For example, in the example shown in FIG. 12, the data are sequentially read from the PC card type HDD 103 in the order of cluster numbers 03, 04, 05, 08, 0B, and 09. Each piece of these data is sequentially decoded by the decoder unit 110 and outputted from the output unit 111.

However, in accessing the PC card type HDD 103, the file read unit 107 generally specifies the sector number for accessing the PC card type HDD 103. Namely, the file read unit 107 must identify the sector number corresponding to the cluster number from the cluster size and sector size of the PC card type HDD 103 stored in the recording medium detection unit 105 in step S4, so that the file read unit 107 calculates the sector number to be accessed and accesses the calculated sector number to read the data.

At this moment, a cluster may extend over a plurality of sectors, so that the file read unit 107 also detects the association between the sector size and the cluster size. For the reading of the end cluster constituting the file, all of the data in the cluster are not always a component of the file, so that the file read unit 107 manages the necessary data amount in the end cluster from the file size to read only the necessary data amount from the end cluster.

Then, in step S10, the file read unit 107 determines whether or not the end of the processing has been instructed. If the end of processing has not been instructed, the file read unit 107 returns this processing to step S7 to repeat the above-mentioned processing therefrom. Namely, this processing put in a wait state until the user selects a next file. When the user selects a predetermined file, the newly selected file is reproduced by the above-mentioned processing operations of steps S8 and S9.

If the end of the processing has been instructed, this processing comes to an end.

It should be noted that, in this example, the above-mentioned processing of step S8 (FAT information is obtained and analyzed to generate the conversion table 131 shown in FIG. 13) is referred to as "FAT information acquisition and analysis processing".

"FAT information acquisition and analysis processing" in this example is detailed in FIG. 13. The following describes "FAT information acquisition and analysis processing" in this example with reference to FIG. 13.

First, in step S61, the file information read unit 106 references the file information 31 (FIG. 4) obtained by the processing of step S6 shown in FIG. 9 to detect the start cluster number Cs of the reproduction file.

In step S62, the file information read unit 106 initializes table number X to be detected (sets table number X to be detected = start cluster number Cs) and sets file cluster count m = 1 in step S63.

In step S64, the file information read unit 106 calculates read-in sector p and reads the sector p in step S65.

For example, assume that sector p constituted by FAT[03] through FAT[0B] as shown in FIG. 11 have been read in.

At this moment, in step S66, the file information read unit 106 analyzes FAT[X] (at this point of time, [03] for the table number of FAT[03]) and, in step S67, adds X to the area 144 of the conversion table 131 as a cluster table 151 as shown in FIG. 12.

In step S68, the file information read unit 106 determines whether or not

FAT[X] = EOF code.

In this example, FAT[03] is [04] and not the EOF code, so that, in step S68, the file information read unit 106 determines that

FAT[X] = EOF code

is not established and, in step S69, sets table number X to be detected = value of FAT[X] and cluster count m = m + 1. Namely, table number X to be detected next is [04] which is the value of FAT[03], so that the table to be detected next is FAT[04] and cluster count m = 2.

In step S70, the file information read unit 106 determines whether or not FAT[X] exists in sector p. If FAT[X] is not found in sector p, the file information read unit 106 returns this processing to step S64 and calculates new read-in sector p to repeat the above-mentioned processing therefrom.

In this example, as shown in FIG. 11, FAT[04] exists in sector p, so that the file information read unit 106 determines in step S70 that FAT[X] exists in sector p, returning this processing to step S66 to repeat the above-mentioned processing therefrom. Namely, the file information read unit 106 adds "04 (table number of FAT[4])" to the area 144 of the conversion table 131 as a cluster table 152 and repeats the above-mentioned processing with FAT[5] corresponding to value [05] described in FAT[04] used as the table to be detected.

When the above-mentioned processing is repeated and cluster number [09] of FAT[09] which is the EOF code is added to the area 144 of the conversion table 131 as a cluster table 156, then, in step S68,

FAT[09] = EOF code

is determined.

Next, in step S71, the file information read unit 106 determines cluster count m and the cluster table, returning the processing. Namely, the file information read unit 106 generates the conversion table 131 as shown in FIG. 12 and stores it into the RAM 108.

It should be noted that an area 141 of the conversion table 131 is an additional information area, in which the additional information about each file is stored. For example, as described above, the cluster number m ("6" in the example of FIG. 12) established by the processing of step S71 is stored in an area 143. The file name is stored in an area 142.

Now, the reproduction processing by the AV file reproducing apparatus 91 has been described. When the AV file reproducing apparatus 91 actually reproduces an AV file, the AV file reproducing apparatus 91 must detect the moving image compressing scheme and the audio compression scheme described in the AV file recorded to the PC card type HDD 103 and, by considering the time sequences of the described image data and audio data, read the AV data from the AV file. Also, before reproducing these data, the AV file reproducing apparatus 91 must execute the processing of the time sequences of these audio data and image data in a synchronous manner.

The following describes this synchronous processing.

If an AV file recorded to the PC card type HDD 103 is a program stream file containing image and audio information compressed by MPEG2, the file read unit 107 detects, before reading in the image information and audio information from the AV file, the bit rate of each of these pieces of information.

It should be noted that, in the image data compressed by MPEG2, a unit called a GOP layer is formed, the GOP layer being composed of an intra-flame coded picture called I picture, a forward predictive-coded picture called P picture, and a bidirectionally predictive-coded picture called B picture. This GOP layer always has one I picture. This I picture is obtained by encoding one frame of image in a single manner and therefore may be coded without being dependent on other pictures. For example, FIG. 14 illustrates the structure of MPEG2 image data in which one GOP 131 is formed by 15 frames. In the example of FIG. 14, the I picture is a start frame 131-0.

After the detection of the above-mentioned bit rate, the file read unit 107 detects the picture type of image information and accumulates the image information in the RAM 109 in unit of one GOP based on I picture.

FIG. 15 illustrates the configuration of storage areas in the RAM 109. As shown in FIG. 15, the RAM 109 stores the image information in unit of GOP into the area 141 on a time basis and the audio information into the area 142 on a time basis, so that the memory capacity is divided on a time basis equivalent to one GOP of video information (image and audio information) (in the example of FIG. 15, the area 141 is further divided into an area 141-1 and an area 141-2 and the area 142 is further divided into an area 142-1 and an area 142-2).

For example, if an AV file containing video information having the GOP structure as shown in FIG. 14, the area 141-1 and the area 141-2 in which the image information based on NTSC (National Television System Committee) have each a capacity equivalent to 0.5 second (for 15 frames).

FIG. 16 illustrates an exemplary sequence of the synchronous processing of the time sequences of audio data and video data. In FIG. 16, a sequence 151 is indicative of a sequence associated with the inputting of the RAM 109. A sequence 152 is indicative of a sequence associated with the output of the area 141-1, a sequence 153 is indicative of a sequence associated with the output of the area 141-2, a sequence 154 is indicative of a sequence associated with the output of the area 142-1, and a sequence 155 is indicative of a sequence associated with the output of the area 142-2.

In starting file reproduction processing, the file read unit 107 requests the PC card type HDD 103 for access. Consequently, the data are read starting from the start cluster of the AV file.

The file read unit 107 detects audio information (data) and image information (data) and sequentially stores the detected information into the RAM 109 in the order indicated by the sequence 151. It should be noted that, in FIG. 16, letter "V" is indicative of image information while letter "A" is indicative of audio information. Therefore, in what follows, the image information for one GOP is simply denoted as "Vk (k being any integer indicative of reproduction sequence)" and the audio information for one GOP is simply denoted as "Ak".

As described above, the RAM 109 stores the audio information and the image information into different areas on a time basis. In the example of FIG. 16, as indicated by the sequence 152, "V1" is stored in period T1 from time t1 to time t4 (to be more specific, a time from time t1 to time t2 and a time from time t3 to time t4) in the area 141-1 and, as indicated by the sequence 154, "A1" is stored in the area 142-1 in time T2 from time t2 to time t3.

When the information ("V1" and "A1") for the time equivalent to that of one GOP has been accumulated in the RAM 109, namely, when time t4 has been reached, the file read unit 107 outputs "V1" from the area 141-1 for every picture and "A1" from the area 142-1 for every frame to the decoder unit 110.

In other words, as shown in the sequence 154, "A1" is all stored in the area 142-1 at time t3; however, the output to the decoder unit 110 is not executed at time t3 but at time t4 (the time at which the accumulation of "V1" is completed) so as to provide synchronization with "V1". Namely, period T3 from time t3 to time t4 is a standby time for providing synchronization with "V1".

The decoder unit 110 decodes the image information sequentially supplied from the file read unit 107 on a picture basis, decodes the audio information on a frame basis, and establishes the output timing of the decoded data from a time stamp (the presentation time stamp) of the MPEG-formatted image information and audio information.

As a result, the next image information (for one picture) outputted from the file read unit 107 and the next audio information (for one frame) are not accepted until the decoder unit 110 completes the decoding processing of the current image information (for one picture) and the current audio information (for one frame).

Therefore, if the transfer band between the file read unit 107 and the RAM 109 is relatively wide, the accumulation of the next data for one GOP ("V2") into the RAM 109 (the area 141-2) is completed while the picture data in the GOP concerned (for example, the picture data in "V1") are being outputted from the RAM 109 (at time t7), as shown in the sequence 153.

Likewise, as shown in the sequence 155, the accumulation of the next data ("A2") for one GOP into the RAM 109 (the area 142-2) is completed while the frame data in the GOP concerned (for example, the frame data in "A1") are being outputted from the RAM 109 (at time t6).

At this moment, the file read unit 107 pauses the access to the PC card type HDD 103 until the data for one GOP concerned is outputted completely to the decoder unit 110. For example, in the example of FIG. 15, the period in which the access to the PC card type HDD 103 is paused is period T4 from time t7 to time t8 as shown in the sequence 151.

It should be noted that, as described above, the access itself to the PC card type HDD 103 is executed on a sector basis, so that, if the last data of GOP is the data halfway through a sector, the file read unit 107 accumulates the remaining data in that sector into the RAM 109.

Repeating the above-mentioned sequence of processing operations, the file read unit 107 executes the synchronous reproduction in accordance with the image and audio time sequences.

The following describes the fast-forward reproduction processing of the AV file reproducing apparatus 91 with reference to the flowcharts shown in FIGS. 17 and 18.

In this example, an AV file to be fast-forward reproduced is a file of MPEG2 video information (image and audio information) based on the GOP 131 as shown in FIG. 14.

As described above, the GOP 131 always has one I picture 131-0. This I picture 131-0 is obtained by encoding one frame of image in a single manner and therefore its decoding can be executed without being dependent on other pictures, so that the AV file reproducing apparatus 91, when executing fast-forward reproduction, searches the AV file for this I picture 131-0 and decodes only the retrieved I picture for reproduction.

Assume here that fast-forward reproduction has been instructed by the user.

In this example, the FAT is used as described above, so that, in step S101, the file read unit 107 detects the bit rate qa (bps), cluster size ma (sector count), and sector size sa (Byte) of the video of a target AV file among the AV files stored in the PC card type HDD 103.

In step S102, the file read unit 107 determines whether or not the I picture concerned has been reproduced. If this I picture has been reproduced, then the file read unit 107 detects cluster table number ka and sector number pa at which the start of the I picture immediately before (the I picture to be reproduced next) exists in step S104.

In step S105, the file read unit 107 substitutes the bit rate qa (bps), cluster size ma (sector count), and sector size sa (Byte) detected in the processing of step S101 and the cluster table number ka and sector number pa detected in the processing of step S104 into the following equation (1) to calculate read-in cluster table number na:

$$na = ka + ((qa/sa)/ma) + ((qa\%sa + pa)/ma) \qquad (1)$$

It should be noted that, in the above-mentioned equation (1), "%" denotes an operator for calculating the remainder resulted from dividing "variable positioned immediately before %" by "variable position immediately after %" (subsequently, the same holds true).

In step S106, the file read unit 107 substitutes the bit rate qa (bps), cluster size ma (sector count), and sector size sa (Byte) detected in the processing of step S101 and the value of the cluster table of cluster table number na calculated in step S105 into the following equation (2) to calculate read-in sector number ra.

It should be noted that the value of the cluster table of cluster table number na (= the cluster number of the cluster in which next data are recorded) is represented as cluster table [na] in the following equation (2).

For example, in the case of the conversion table 131 shown in FIG. 12, if the cluster number of the cluster table 151 is "1" and cluster numbers are subsequently assigned in sequence, then cluster table "1" is "03 (the value of the cluster table 151)".

$$ra = \text{cluster table } [na] * ma + (qa\%sa + pa)\%ma \qquad (2)$$

Thus, in the processing of steps S104 through S106, the file read unit 107 calculates the approximate data amount from the I picture concerned (the I picture immediately before) to the next I picture on the basis of the bit rate qa (bps), cluster size ma (sector count), and sector size sa (Byte) detected in step S101. Further, the file read unit 107 calculates the approximate position of the next I picture in association with the cluster table of the conversion table 131 (FIG. 12) of the target file stored in the RAM 108.

In step S107, the file read unit 107 determines whether or not the read-in cluster table number na calculated in the processing of step S105 is within the range of the file concerned. If the read-in cluster table number na is found not within the range of the file concerned, then the file read unit 107 ends this processing. Namely, if the read-in cluster table number na is in excess of the end of the file concerned (for example, in the example of FIG. 12, if the cluster number table is in excess of cluster number "6" in the cluster table 156 in the conversion table 131 of the file concerned), this processing is ended.

On the other hand, if the cluster table number is found within the range of the file concerned in step S107, then in step S110 of FIG. 18, the file read unit 107 reads the data of sector number ra recorded to the PC card type HDD 103. Namely, the sector number ra of the current point of time is the search start position.

In step S111, the file read unit 107 determines whether or not the start of the I picture has been detected. Namely, the file read unit 107 determines whether or not the data of the sector number ra read in the processing of step S110 is the data at the start of the I picture.

If the start of the I picture is found not detected in step S111, then the file read unit 107 determines in step S113 whether or not

$$(\text{read-in sector number ra})\ \%\ (\text{cluster size ma}) = 0$$

where ra = ra + 1.

If ra % ma = 0 is not found in step S113, then the file read unit 107 returns this processing to step S110 to repeat the above-mentioned processing therefrom. Namely, the file read unit 107 reads the data of the next sector and determines whether or not the data is the data at the start of the I picture.

On the other hand, if

$$ra\ \%\ ma = 0$$

is found, the file read unit 107 sets the read-in cluster table number na = na + 1 in step S114 and returns this processing to step S108 to determine whether or not the read-in cluster table number na is within the range of file concerned.

If the read-in cluster table number is found not within the range of the file concerned in step S108, then the file read unit 107 ends this processing like the above-mentioned processing of step S107.

On the other hand, if the read-in cluster table number is found within the range of the file concerned in step S108, the file read unit 107 calculates read-in sector number ra by the following equation (3). It should be noted that ma in the following equation (3) denotes cluster size.

$$ra = \text{cluster table } [na] * ma \tag{3}$$

Next, in step S110, the file read unit 107 reads the data of sector number ra and determines in step S111 whether or not the data is the data at the start of the I picture.

Namely, if

$$ra\ \%\ ma = 0$$

is not determined in the processing of step S113, the search for the data of the cluster of the next cluster number (the search whether or not there is the start data of the I picture) is executed.

If the start of the I picture is found detected in step S111, then the file read unit 107 starts accumulating picture data with (sector number pa) = (read-in sector number ra) and (cluster table number ka) = (read-in cluster table number na).

To be specific, the file read unit 107 starts the processing of reading the data of the I picture from the PC card type HDD 103 and storing the data into the RAM 109.

In step S116, the file read unit 107 determines whether or not the end of the I picture has been detected. If the end of the I picture is found not detected, the file read unit 107 puts the processing forward to step S112 to repeat the above-mentioned processing therefrom.

On the other hand, if the end of I picture is found detected, the file read unit 107 outputs the accumulated data in step S120. To be specific, the file read unit 107 supplies the data of the I picture stored in the RAM 109 to the decoder unit 110. The decoder unit 110 decodes the supplied I picture data and supplies the decoded data to the output unit 111 (the display device), which displays the image of the I picture.

Thus, the accumulation of the I picture into the RAM 109 is continued until the end of the I picture is detected. Upon detection thereof, the data of the I picture are supplied to the decoder unit 110.

When the processing of step S120 has been completed, the procedure is returned to step S104 to repeat the above-mentioned processing therefrom. Namely, the search for a still next I picture is executed.

Now, the case in which the corresponding I picture has been reproduced before the processing of the fast-forward operation has been described.

In this case, as described above, the file read unit 107 searches for the I picture positioned immediately before the I picture reproduced before and repeats the processing of reproducing the detected I picture, thereby executing fast-forward reproduction.

On the other hand, if the I picture contained in the file concerned has not been reproduced, namely, if no I picture is found reproduced before in step S102 shown in FIG. 17, the file read unit 107 initializes the read-in cluster table number na in step S103. In this example, the read-in cluster table number na is initialized to the target cluster table number and the read-in sector number ra to the target sector number.

Then, the file read unit 107 goes to step S110 shown in FIG. 18 to repeat the above-mentioned processing therefrom.

To be more specific, the file read unit 107 reads the data recorded at the sector number ra providing the search start position from the PC card type HDD 103 and, at the point of time the picture header of the I picture is detected, starts storing the data of this I picture into the RAM 109.

As described above, the arrangement of the data of each AV file stored in the PC card type HDD 103 is continuous within a cluster. However, because there is no cluster continuation, if data reading is continuously required after reading data from one cluster, the cluster number recording the next data is retrieved for the calculation of the start sector of this cluster. If continuous data are read from one cluster, this processing is executed by incrementing the sector number.

As described above, the accumulation of the I picture data into the RAM 109 is continued until the end of the I picture is detected. When the end of the P picture is detected, the I picture data accumulated in the decoder unit 110 are sent to the decoder unit 110 to be decoded, and the decoded data is displayed on the output unit 111 (the display device). Then, the processing of searching for the next I picture is executed.

It should be noted that, as described above, in the fast-forward reproduction processing according to the invention, the file read unit 107 detects the bit rate of video data and starts reading the data by a data amount equivalent to the detected bit rate.

If only I picture search processing is put into consideration, the file read unit 107 may analyze the GOP header of MPEG2 format and calculate the sector number of the PC card type HDD 103 to be read next from the GOP data amount in which the analyzed GOP header is included.

On the other hand, in the case of a general-purpose MPEG2 file, it is assumed that the number of pictures included in each GOP is different from each other. Therefore, in the present invention, the file read unit 107, by taking this into consideration, uses the value of bit rate to always search for the data of a certain period of time ahead also in the reproduction of a general-purpose MPEG2 file.

To be more specific, in the above-mentioned example, the file read unit 107 reads the video data of bit rate ahead, which denotes the search for the data one second ahead.

For the I picture next to the reproduced I picture to be searched for, the data ahead by the data amount equivalent to the bit rate of video data is read as described above. Actually, however, even when the reading of the data ahead starts, the I picture to be reproduced next is not detected immediately. Namely, the next I picture is not detected immediately due to the header attached to the video information and the multiplexed audio data.

Therefore, the file read unit 107 continues to read the data from the PC card type HDD 103 until the I picture is detected.

Thus, the AV file reproducing apparatus 91 can execute fast-forward reproduction of each AV file when the file read unit 107 continues the sequence of processing operations indicated by the flowcharts shown in FIGS. 17 and 18 up to the end of a desired AV file.

The following describes the details of the fast-backward reproduction by the AV file reproducing apparatus 91 with reference to the flowcharts shown in FIGS. 19 and 20.

Assume here that fast-backward reproduction has been instructed by the user.

In this example, the FAT is used as described above so that the file read unit 107 detects the bit rate qa (bps), cluster size ma (sector count), and sector size sa (Byte) of the video data of an AV file concerned among the AV files stored in the PC card type HDD 103 in step S151, thereby setting jump margin amount ya (%).

In step S152, the file read unit 107 determines whether or not the I picture of the file concerned has been reproduced.

If this I picture is found reproduced, the file read unit 107 detects, in step S153, the cluster table number ka and sector number pa at which the start of the I picture immediately before exists.

On the other hand, if the I picture is found not reproduced, the file read unit 107 initializes the cluster table number ka in step S154. Here, the cluster table number ka is initialized to the currently concerned table number and the sector number pa to the currently concerned sector number.

In step S155, the file read unit 107 substitutes the bit rate qa (bps), cluster size ma (sector count), and sector size sa (Byte) detected in the processing of step S151 and the cluster table number ka and sector number pa set in the processing of step S153 or S154 into the following equation (4) to calculate read-in cluster table number na:

$$na = ka - ((ya/100)*qa/sa)/ma) - (((ya/100)*qa\%sa + pa)/ma) \quad (4)$$

In step S156, the file read unit 107 substitutes the bit rate qa (bps), cluster size ma (sector count), and sector size sa (Byte) detected in the processing of step S151 and the value of the cluster table of cluster table number na (cluster table [na]) detected in the processing of step S155 into the following equation (5) to calculate read-in sector number ra:

$$ra = cluster\ table[na]*ma + ((ya/100)*qa\%sa + pa)\ \%ma \quad (5)$$

Thus, like the fast-forward reproduction processing the file read unit 107 calculates the approximate data amount from the I picture concerned to the next I picture on the basis of these bit rate qa (bps), cluster size ma (sector count), and sector size sa (Byte). Further, the file read unit 107 calculates the approximate position of the next I picture in association with the cluster table of the file concerned stored in the RAM 109.

Then, the file read unit 107 puts the processing forward to step S157 shown in FIG. 20 to execute the processing operations of steps S157 through S166.

It should be noted that the processing operations of the steps S157 through S166 correspond to the processing operations of steps S108 through S120 shown in FIG. 18 respectively, so that the description thereof will be skipped.

To be specific, in the fast-backward reproduction processing, like the fast-forward reproduction processing, the processing that "the data ahead by the data amount equivalent to the bit rate of video data are read, the I picture is detected from the read data, and the detected I pictured is reproduced" is repeatedly executed.

However, as described above, in the fast-backward reproduction processing, the sector to be read next is established by an amount obtained by adding the jump margin amount ya (%) set in the processing of step S151 shown in FIG. 19 as the data amount equivalent to the bit rate of video data with considering additional data such as header data and audio data. This is because the desired I picture cannot be detected due to the above-mentioned additional data.

Referring to FIG. 21, there is shown a flowchart describing an example in which a cluster table (a conversion table) is created immediately after the power-on sequence as contrasted to the above-mentioned reproduction processing (the processing described with reference to the flowchart shown in FIG. 9).

The processing operations of steps S201 through S206 shown in FIG. 21 correspond to the processing operations of steps S1 through S6 shown in FIG. 9 respectively, so that the description thereof will be skipped.

However, in FIG. 9, "FAT information acquisition and analysis processing" is executed after the selection of the file to be reproduced by the user (if the decision is YES in the processing of step S7); in FIG. 21, this processing is executed immediately after the power-on sequence. Namely, "FAT information acquisition and analysis processing" is executed as the processing of step S207 after the processing of step S206.

This "FAT information acquisition and analysis processing" is executed for each file stored in the PC card type HDD 103. Consequently, the AV file reproducing apparatus 91 becomes ready for the reproduction processing after a file to be reproduced is selected by the user, namely, if the file is found selected in step S208, so that the processing time from file selection to reproduction processing can be significantly shortened.

To be specific, in step S209, the file read unit 107 reads the table of the file concerned (the selected file) from the PC card type HDD 103 and reproduces this file in step S210.

Referring to FIG. 22, there is shown another exemplary configuration of an AV file reproducing apparatus as an information processing apparatus to which the present invention is applied. With reference to FIG. 22, components similar to those of the AV file reproducing apparatus 91 shown in FIG. 8 are denoted by the same reference numerals.

Unlike the AV file reproducing apparatus 91 shown in FIG. 8, this AV file reproducing apparatus 201 does not store a cluster table (a conversion table) for performing conversion from FAT information into the AV file reproducing apparatus (the RAM 108 shown in FIG. 8) but can store the cluster table into a PC card type HDD 103.

Therefore, in this exemplary configuration, a buffer 251 and a buffer 252 for supporting the capacity of sector size are connected to a file information read unit 106 and a table write-back control unit 253 for writing back the conversion table 131 (FIG. 12) created by a file read unit 107 to the PC card type HDD 103 as described above is connected to a bus 114.

The table write-back control unit 253 creates the conversion table 131 including additional information for a predetermined file and writes the created conversion table back to the PC card type HDD 103 via a recording medium detection unit 105 and a PC card interface 104 in unit of sectors.

The following describes the reproduction processing by the AV file reproducing apparatus 201 with reference to the flowcharts shown in FIGS. 23 and 24.

For example, assume that the AV file reproducing apparatus 201 has been powered on and the PC card type HDD 103 has been loaded on the PC card interface 104.

At this moment, the processing operations of steps S301 through S306 shown in FIG. 23 corresponding to those of steps S1 through S6 shown in FIG. 9 respectively are executed.

To be more specific, if the PC card type HDD 103 is found compatible with the AV file reproducing apparatus 201 (the decision is YES in the processing of step S303) and its logical format is also found compatible (the decision YES in the processing of step S305), then "file information acquisition processing (FIG. 10)" corresponding to the above-mentioned processing of step S6 shown in FIG. 9 is executed in step S306.

However it is assumed in this example that file information 31 (FIG. 4), namely, file names and file sizes, recorded.to the root directory area 13 (FIG. 1) of the PC card type HDD 103 be stored in the buffer 251.

If the file information 31 of each of all files recorded to the PC card type HDD 103 is stored in the buffer 251 (if the processing of step S306 comes to an end), then, in step S307, the table write-back control unit 253 accesses the FAT area 12 (FIG. 1) of the PC card type HDD 103 to calculate a free capacity in the PC card type HDD 103 from FAT[0] through FAT[n].

In the method of calculating this free area, the table write-back control unit 253 calculates the number of FATs with its value being "0" from FAT[0] through FAT[n] and multiplies the obtained value by the cluster size, in this example but not limited thereto.

Referring to FIG. 24, in step S308, the table write-back control unit 253 generates the conversion table 131 as shown in FIG. 12 and writes the generated table back to the PC card type HDD 103 via the recording medium detection unit 105 and the PC card interface 104.

It should be noted that, in this example, this processing in step S308 is referred to as "FAT information acquisition and analysis processing and processing of writing conversion table into recording medium".

Details of "FAT information acquisition and analysis processing and processing of writing conversion table into recording medium" in this example are shown in FIG. 25. The following describes "FAT information acquisition and analysis processing and processing of writing conversion table into recording medium" in this example with reference to FIG. 25.

First, in step S331, the table write-back control unit 253 calculates free cluster count kb on the basis of the file information stored in the buffer 251 in the processing of step S306 shown in FIG. 24 to detect file count nb, sector size Sb (Byte), and cluster size rb.

The table write-back control unit 253 initializes search end count mb in step S332 and initializes the capacity pb necessary for writing back the conversion table 131 (hereafter referred to as a necessary capacity) in step S333. In the initialization processing of this example, search end count mb is 0 and necessary capacity pb is 0.

In step S334, the table write-back control unit 253 determines whether or not

$$(\text{search end count } mb) = (\text{file count } nb).$$

If

$$mb = nb$$

is not found in step S334, the table write-back control unit 253 sets mb = mb + 1 in step S335 and reads file size qb of the mb-th file stored in the buffer 251 in the processing of step S306 shown in FIG. 23.

In step S337, the table write-back control unit 253 substitutes the sector size Sb and cluster size rb detected in the processing of step S331 and the file size qb read in the processing of step S336 into the following equation (6) to calculate the necessary capacity pb:

$$pb = pb + qb/Sb/rb \qquad (6)$$

In step S338, the table write-back control unit 253 determines whether or not

Necessary capacity pb > free cluster count kb.

If the table write-back control unit 253 determines that

pb > kb,

then, the table write-back control unit 253 returns this processing. Namely, "pb > kb" denotes that the PC card type HDD 103 does not have an enough capacity for writing back the conversion table 131. In this case ("pb > kb"), the above-mentioned FAT information acquisition and analysis processing shown in FIG. 11 is executed in the processing of step S312, thereby generating the conversion table 131.

On the other hand, if the table write-back control unit 253 determines that

pb > kb

is not found, then the table write-back control unit 253 returns this processing to step S334 to repeat the above-mentioned processing therefrom. Namely, by repetitively executing the processing operations of steps S334 through S338, the table write-back control unit 253 calculates the necessary capacity pb for the file count nb.

Having calculated the necessary capacity pb for the file count nb, the table write-back control unit 253 determines in step S334 that

mb = nb

and, in step S339, sets the search end count mb = 0 (initializes) and determines in step S340 whether or not

Necessary capacity pb = 0.

If the table write-back control unit 253 determines in step S340 that

pb = 0,

then the table write-back control unit 253 returns this processing; if the table write-back control unit 253 determines that

pb = 0

is not found, the table write-back control unit 253 determines in step S341 whether or not

Search end count m = file count nb.

If the table write-back control unit 253 determines in step S341 that

mb = nb

is not found, then the table write-back control unit 253 sets mb = mb + 1 in step S342 and creates the conversion table 131 of the mb-th file in unit of sector size Sb (byte), writing the created conversion table 131 back to the PC card type HDD 103 via the recording medium detection unit 105 and the PC card interface 104.

Namely, in this example, if it assumed that the AV file reproducing apparatus 201 support the PC cards based on the PC card ATA interface and the loaded PC card type HDD 103 use this PC card ATA interface, then the data access between the AV file reproducing apparatus 201 and the PC card type HDD 103 is executed on a sector basis.

Therefore, the table write-back control unit 253 creates the conversion table 131 on a sector basis, which corresponds to each file recorded to the PC card type HDD 103.

It should be noted that, actually, the conversion table 131 includes all cluster tables within the file concerned and is divided into sectors to be stored in the PC card type HDD 103. Namely, the data on a sector basis are collected to form the conversion table 131 of the file concerned.

In what follows, in order to make a distinction therebetween, the actual conversion table 131 (including all cluster tables within the file) is referred to as a total-file conversion table 131 and the conversion table obtained by dividing the total-file conversion table 131 on a sector basis is referred to as a divided conversion table.

When the processing of step S343 comes to an end, the procedure returns to step S341 to repeat the processing therefrom. Namely, the repetitive execution of the processing operations in steps S341 through S343 generates the total-file conversion table 131 for each of the files (up to the nb-th), and all of the generated tables are written back to the PC card type HDD 103.

Consequently, it is determined in step S341 that

$$mb = nb$$

and this processing is returned.

It should be noted that, in this example, the above-mentioned processing of step S343 is referred to as "creation and write-back processing in unit of Sb (Byte) of conversion table of mb-th file".

Details of "creation and write-back processing in unit of Sb (Byte) of conversion table of mb-th file" in this example is shown in FIG. 26. The following describes "creation and write-back processing in unit of Sb (Byte) of conversion table of mb-th file" in this example with reference to FIG. 26.

First, in step S360, the table write-back control unit 253 calculates cluster table amount yb (Byte) of the file concerned. It should be noted that, in this example, cluster table amount yb is equivalent to the capacity of the area 144 (FIG. 12) in the total-file conversion table 131.

In step S361, the table write-back control unit 253 calculates sector count xb (hereafter referred to as the necessary sector count) necessary for writing back and remainder zb (Byte) from the conversion table amount yb calculated in the processing of step S360 and the additional information amount (the amount equivalent to the capacity of the area 141 (FIG. 12) in the total-file conversion table 131).

In step S362, the table write-back control unit 253 sets cyclic count LB = 0.

In step S363, the table write-back control unit 253 determines whether or not

$$\text{Cyclic count LB} = \text{necessary sector count xb.}$$

If the table write-back control unit 253 determines in step S363 that

$$\text{Cyclic count LB} = \text{necessary sector count xb}$$

is not found, the table write-back control unit 253 creates a divided conversion table for capacity "(sector size Sb) - (buffer write capacity cb)" and accumulates (stores) the created table into the buffer 252 for example via the table write-back control unit 253.

In step S365, the table write-back control unit 253 reads the contents (the divided conversion table accumulated in the processing of step S365 immediately before) of the buffer 252 via the file information read unit 106 and stores the table into the PC card type HDD 103 via the recording medium detection unit 105 and the PC card interface 104.

In step S366, the table write-back control unit 253 sets buffer write amount cb = 0 and, in step S367, sets cyclic count LB = LB + 1.

Then, the table write-back control unit 253 returns this processing to step S363 to repeat the processing therefrom. Namely, a next divided conversion table is generated to be written back to the PC card type HDD 103.

When this sequence of processing operations (the processing operations of steps S363 through S367) is repeated until cyclic count LB becomes necessary sector count xb, the total-file conversion table 113 of the file concerned (mb-th file) is written back to the PC card type HDD 103.

The following describes buffer write capacity cb.

As described above, the table write-back control unit 253 repetitively creates a divided conversion table on a sector basis of Sb (Byte) of the file concerned and writes the created divided conversion table to the PC card type HDD 103, thereby writing the total-file conversion table 131 of the file concerned back to the PC card type HDD 103.

However, because the file size of the file concerned depends on each file, the cluster table amount (for example, in the example of FIG. 12, the amount of 5 tables, the amount of the cluster tables 151 through 156) of the file concerned also depends on each file. Therefore, if the last divided conversion table is generated in the total-file divided table 131 of the file concerned, the capacity of the last divided conversion table may not amount to the capacity (Sb (Byte)) for one sector.

In such a case, if the total-file conversion table 131 for another file is generated, the table write-back control unit 253 adds the above-mentioned last divided conversion table of the file concerned and the first divided conversion table of the next file together to provide the data of the capacity for one sector and writes the added data back to the PC card type HDD 103.
Namely, the capacity of the last divided conversion table of this file concerned provides buffer write capacity cb.
In other words, if the cyclic count LB is 1 for example (if the first divided conversion table of the mb-th file is generated), the table write-back control unit 253 subtracts capacity cb of the last divided conversion table of the file immediately before ((mb-1)th file) from sector size Sb and sets the results as the capacity of the first divided conversion table of the mb-th file in step S364. Then, the table write-back control unit 253 generates the first divided conversion table of the mb-th file for the capacity (sb - cb) thus set and stores the generated divided conversion table into the buffer 252.
At this moment, the buffer 252 stores the last divided conversion table of th (mb - 1)th file having a capacity of cb, in addition to the just stored first divided conversion table of the mb-th file.
Therefore, in step S365, the table write-back control unit 253 combines the first divided conversion table of the mb-th file with the last divided conversion table of the (mb - 1)th file (into one sector) and writes the result back to the PC card type HDD 103.
It should be noted that, subsequently, the (mb - 1)th file does not have an effect, so that the buffer write capacity cb is always 0 in the processing of step S366. Namely, in the subsequent processing operations in steps S364 and S365, the divided conversion table having a capacity of sector size Sb is generated for the mb-th file and the generated divided conversion table is written back to the PC card type HDD 103.
As a result, there occurs a boundary in the total-file conversion table 131 between two different files (the last divided conversion table of the first file and the first divided conversion table of the second file) in a predetermined sector of the PC card type HDD 103.
For this reason, the table write-back control unit 253 stores the association between the start address as the start position (the start position of the total-file conversion table 131) of the first divided conversion table of the above-mentioned file and the word position in the sector of the PC card type HDD 103, as well as the sequence of the cluster tables of the total-file conversion table 131 as the additional information to the file information stored in the buffer 251.
When file reproduction is instructed by the user in the processing of step S309 shown in FIG. 24 to be described later, these pieces of additional information are referenced for the identification of the position of the cluster table of the file to be reproduced.
Thus, when the conversion tables 131 (a plurality of divided conversion tables) for xb sectors are written back to the PC card type HDD 103,

$$LB = xb$$

is determined in step S363, upon which the procedure goes to step S368.
In step S368, the table write-back control unit 253 determines whether or not

Remainder zb (calculated in the processing of step

S361) = 0.

Namely, "remainder zb = 0" denotes that the capacity of the last divided conversion table of the file concerned is sector size Sb. Therefore, there is no need to combine the last divided conversion table with the first divided conversion table of the next file as described above. So, if

$$zb = 0$$

is determined in step S368, the processing is returned.
On the other hand, "remainder zb ≠ 0" denotes that the capacity of the last divided conversion table of the file concerned has not amounted to sector size Sb. Therefore, it is required to combine the last conversion table 131 with the first conversion file 131 of the next file.
If it is determined in step S368 that

zb = 0

is not found, then the table write-back control unit 253 sets buffer write capacity cb = remainder zb in step S369 and generates a divided conversion table for capacity "cb" in step S370, accumulating (storing) the generated divided conversion table into the buffer 252 via the file information read unit 106. Then, the processing is returned.

Namely, in step S370, the table write-back control unit 253 generates the last divided conversion table of the mb-th file with remainder zb (= cb) and accumulates the generated divided conversion table into the buffer 252.

As described above, the last divided conversion table of the mb-th file is kept stored (accumulated) in the buffer 252 without change until the first divided conversion table of the next file (the mb+1-th file) is generated and the last divided conversion table is combined therewith to be outputted.

Referring to FIG. 24 again, when the total-file conversion table 131 for each file has been written back to the PC card type HDD 103 (when the processing of step S308 has been completed), the procedure goes to step S309.

The above-mentioned processing operations of steps S301 through S308 are the initial sequence immediately after the loading of the PC card type HDD 103 on the PC card interface 104 and the file reproduction operation thereafter is executed by the file specification by the user as with the processing shown in FIG. 9.

The file specification by the user may be executed by displaying the information accumulated in the buffer 251 on the output unit (the display device) 111 as a file list and by user's selecting a desired file from the displayed list.

Thus, with the file list displayed on the display device, the file read unit 107 determines in step S309 whether or not a file has been selected. If a file has not been selected, the file read unit 107 returns the processing to step S309 to determine again whether or not a file has been selected. Namely, the file read unit 107 always determines whether or not a file has been selected.

For example, if a file to be reproduced has been selected by the user, then the file read unit 107 determines in step S309 that a file has been selected and determines in step S310 whether or not the conversion table 131 is stored in the PC card type HDD 103.

If the conversion table 131 is found written in the PC card type HDD 103 in the above-mentioned processing of step S308 (if the conversion table 131 is found stored in the PC card type HDD 103 in step S310), then, in step S311, the file read unit 107 reads the conversion table 131 (the total-file conversion table formed by a plurality of divided conversion tables on a sector basis corresponding to the file selected in the processing of step S309) from the PC card type HDD 103 via the PC card interface 104 and stores this conversion table into the RAM 109.

In step S313, the file read unit 107 reproduces the file on the basis of this conversion table 131.

It should be noted that, as described above, there may exist a boundary in the total-file conversion table 131 between two different files (the last divided conversion table of the first file and the first divided conversion table of the second file) in a predetermined sector of the PC card type HDD 103.

Therefore, the file read unit 107 references the additional information stored in the buffer 251 to detect the start position (the start position of the first divided conversion table of the file concerned) of the total-file conversion table 131 for the file concerned and reads the first divided conversion table in the total-file conversion table 131 recorded in the detected sector (the start sector) and the next divided conversion table recorded in the next (the second) sector, thereby storing these divided conversion tables into the RAM 109.

It should be noted that the file read unit 107 also reads subsequent conversion tables 131 for two sectors (two divided conversion tables) at once and stores the read conversion tables into the RAM 109.

Thus, the file read unit 107 reads two sectors of conversion tables (two divided conversion tables) at once and stores these tables into the RAM 109, so that the occurrence of urgent access to the PC card type HDD 103 can be suppressed.

On the other hand, if no conversion table 131 is written to the PC card type HDD 103 in the processing of step S308 (if no conversion table 131 is found written to the PC card type HDD 103 in step S310), the file read unit 107 generates a conversion table 131 in the processing of step S312. Namely, the file read unit 107 executes the above-mentioned "FAT information acquisition and analysis processing" shown in FIG. 13 and generates the conversion table 131 for the file selected in the processing of step S309, thereby storing the generated conversion table into the RAM 109. Then, the procedure goes to step S313.

In step S313, the file read unit 107 reproduces the file on the basis of the conversion table 131.

In step S314, the file read unit 107 determines whether or not the end of processing has been instructed. If the end of processing has not been instructed, the file read unit 107 returns the processing to step S309 to repeat the processing therefrom. Namely, the file read unit 107 puts this processing in a standby state until the file to be reproduced next is selected by the user and, when a file to be reproduced next is selected, executes the above-mentioned processing operations of steps S310 through S313 to reproduce the selected file.

On the other hand, if the end of processing has been instructed, the file read unit 107 determines in step S315 whether or not the conversion table 131 is written to the PC card type HDD 103.

If the conversion table 131 is found not written to the PC card type HDD 103 in step S315, the file read unit 107 ends this processing.

If the conversion table 131 is found written to the PC card type HDD 103, then the file read unit 107 deletes this conversion table 131 from the PC card type HDD 103 via the PC card interface 104 in step S316, thereby ending this processing.

Thus, the AV file reproducing apparatus 201 generates the conversion table (the cluster table) and writes the generated conversion table to the PC card type HDD 103 before reproducing a file, so that the capacity for the conversion table recording memory in the AV file reproducing apparatus 201 can be reduced and file reproduction can be executed by simple table search processing.

As described above, the AV file reproducing apparatus 91 (FIG. 8) and the AV file reproducing apparatus 201 (FIG. 22) use the information indicative of the arrangement of the clusters recorded to the FAT area 12 (FIG. 3) and the file information 31 recorded to the root directory area 13 (FIG. 4) to reconstruct the conversion table 131 (FIG. 12) indicative of the arrangement of clusters on a file basis, so that, in the reproduction of AV files, especially the special reproduction typified by fast-forward reproduction, the table search necessary for the reproduction processing can be executed in a linear manner.

Consequently, the novel configuration mitigates the load of table search processing to enhance the search speed. Therefore, the novel configuration provides the stable fast-forward reproduction even with recording media which are comparatively low in data transfer rate, low-power consumption small-sized HDDs for use on mobile equipment for example.

Moreover, in executing the special reproduction such as fast-forward reproduction, if desired image data cannot be detected when given data have been read, the AV file reproducing apparatuses 91 and 201 recalculate the position of the data to be read, so that the novel configuration provides the stable fast-forward reproduction which is independent of the structure of image streams.

It should be noted that, if the above-mentioned sequence of processing operations is executed by software, the programs constituting this software are installed in the AV file reproducing apparatus 91 or 201 from a network or recording media.

In the case of network communication, the PC card type HDD 103 is removed from the AV file reproducing apparatus 91 or 201 and a PC card type communication device (not shown) is attached to the PC card interface 104.

The recording media storing the above-mentioned software programs may be constituted by not only the PC card type HDD 103 but also the package media including a magnetic disk (such as a floppy disk), an optical disk (such as a CD-ROM (Compact Disk Read Only Memory) and a DVD (Digital Versatile Disk)), and a magneto-optical disk (such as an MD (Mini Disk)), not shown, which are distributed for providing programs to users independently of the apparatus main body as shown in FIGS. 8 and 22. In addition, the above-mentioned recording media include the ROM 113 storing the above-mentioned programs, which is supplied as incorporated in the apparatus main body.

It should be noted herein that the steps for describing each program recorded in recording media include not only the processing operations which are sequentially executed in a time-dependent manner but also the processing operations which are executed concurrently or discretely.

Industrial Applicability

As described and according to the invention, the special reproduction typified by fast-forward reproduction can be provided. In addition, according to the invention, the fast-forward reproduction speed can be enhanced and the stable fast-forward reproduction can be executed.

## Claims

1. An information processing apparatus for outputting a file recorded over a plurality of recording units in a recording medium, comprising:

   access control means for controlling access to said recording medium;
   acquisition means for acquiring a plurality of first file information for each of said plurality of recording units including information indicative of a sequence of data written in said file, said plurality of first file information being recorded to said recording medium, the access to which being controlled by said access control means;
   generating means for sorting, in a predetermined sequence, said plurality of first file information acquired by said acquisition means and generating second file information in unit of said file on the basis of each of the plurality of sorted first file information; and
   output means for outputting said file corresponding to said second file information recorded to said recording medium, the access to which being controlled by said access control means, on the basis of said second file information generated by said generating means.

2. The information processing apparatus according to claim 1, wherein said file is an AV file.

3. The information processing apparatus according to claim 1, wherein said generating means generates said second file information when said information processing apparatus is driven.

4. The information processing apparatus according to claim 1, wherein, when a predetermined file is selected from among a plurality of said files recording to said recording medium, said generating means generates said second file information corresponding to the selected file.

5. The information processing apparatus according to claim 1, further comprising:

storage means for storing said second file information.

6. The information processing apparatus according to claim 1, further comprising:

recording means for recording said second file information to said recording medium in which said file corresponding to said second file information is recorded.

7. The information processing apparatus according to claim 1, wherein said output means, when outputting, relative to a first recording unit being currently outputted, by skipping one or more recording units, a second recording unit positioned after or before said first recording unit, determines whether or not said second recording unit exists at a second position resulted from executing a scan equivalent to a first data amount and, if said second recording unit is not found at said second position, determines whether or not said second recording unit exists at a third position resulted from executing a scan equivalent to a second data amount relative to said second position.

8. The information processing apparatus according to claim 7, wherein said output means sets said first data amount to an arbitrary value.

9. An information processing method for an information processing apparatus for outputting a file recorded over a plurality of recording units in a recording medium, comprising the steps of:

controlling access to said recording medium;
acquiring a plurality of first file information for each of said plurality of recording units including information indicative of a sequence of data written in said file, said plurality of first file information being recorded to said recording medium, the access to which being controlled in said access control step;
sorting, in a predetermined sequence, said plurality of first file information acquired in said acquisition step and generating second file information in unit of said file on the basis of each of the plurality of sorted first file information; and
outputting said file corresponding to said second file information recorded to said recording medium, the access to which being controlled in said access control step, on the basis of said second file information generated in said generating step.

10. A recording medium recording a computer-readable program for controlling an information processing apparatus for outputting a file recorded over a plurality of recording units in a recording medium, comprising the steps of:

controlling access to said recording medium;
acquiring a plurality of first file information for each of said plurality of recording units including information indicative of a sequence of data written in said file, said plurality of first file information being recorded to said recording medium, the access to which being controlled in said access control step;
sorting, in a predetermined sequence, said plurality of first file information acquired in said acquisition step and generating second file information in unit of said file on the basis of each of the plurality of sorted first file information; and
outputting said file corresponding to said second file information recorded to said recording medium, the access to which being controlled in said access control step, on the basis of said second file information generated in said generating step.

**11.** A program for making a computer for controlling an information processing apparatus for outputting a file recorded over a plurality of recording units in a recording medium execute the steps of:

controlling access to said recording medium;
acquiring a plurality of first file information for each of said plurality of recording units including information indicative of a sequence of data written in said file, said plurality of first file information being recorded to said recording medium, the access to which being controlled in said access control step;
sorting, in a predetermined sequence, said plurality of first file information acquired in said acquisition step and generating second file information in unit of said file on the basis of each of the plurality of sorted first file information; and
outputting said file corresponding to said second file information recorded to said recording medium, the access to which being controlled in said access control step, on the basis of said second file information generated in said generating step.

FIG. 1

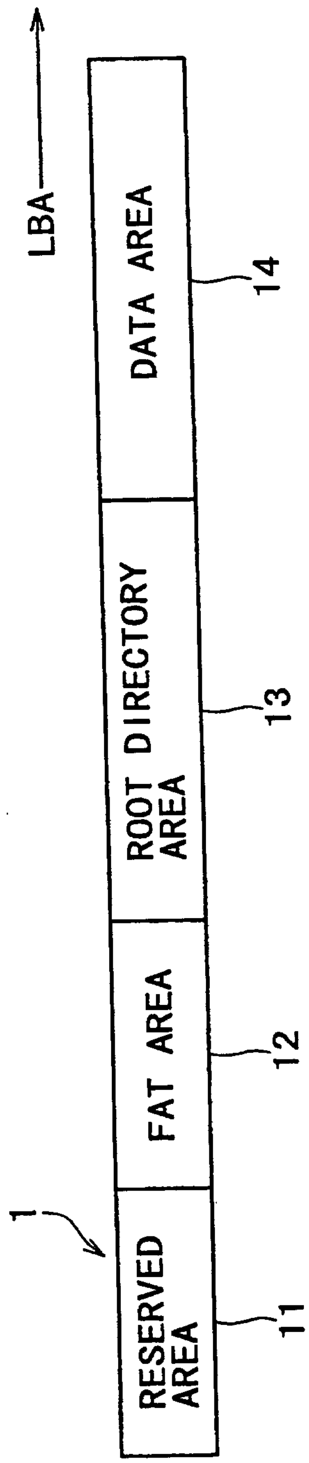
LBA
DATA AREA
14
ROOT DIRECTORY AREA
13
FAT AREA
12
RESERVED AREA
11
1

FIG. 2

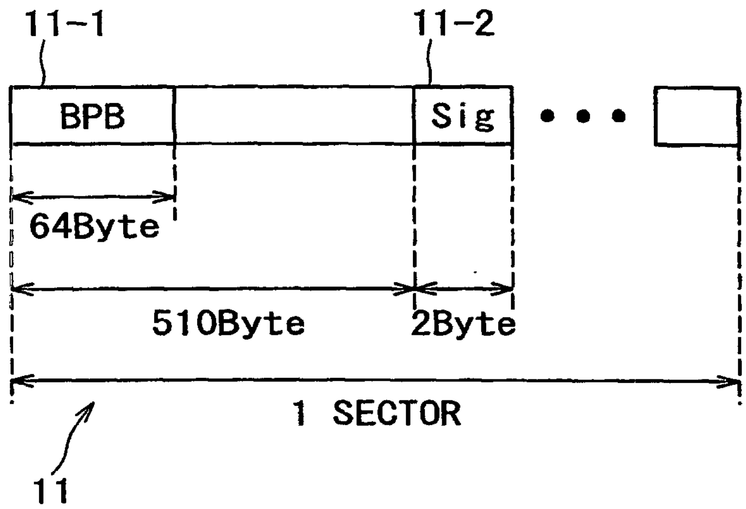
11-1
11-2
BPB
Sig
64Byte
510Byte
2Byte
1 SECTOR
11

FIG. 3

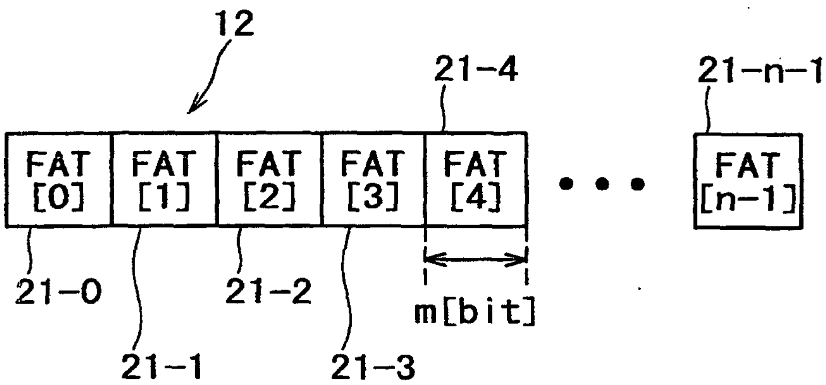
12
21-4
21-n-1
FAT [0]
FAT [1]
FAT [2]
FAT [3]
FAT [4]
FAT [n-1]
21-0
21-2
m[bit]
21-1
21-3

F I G. 4

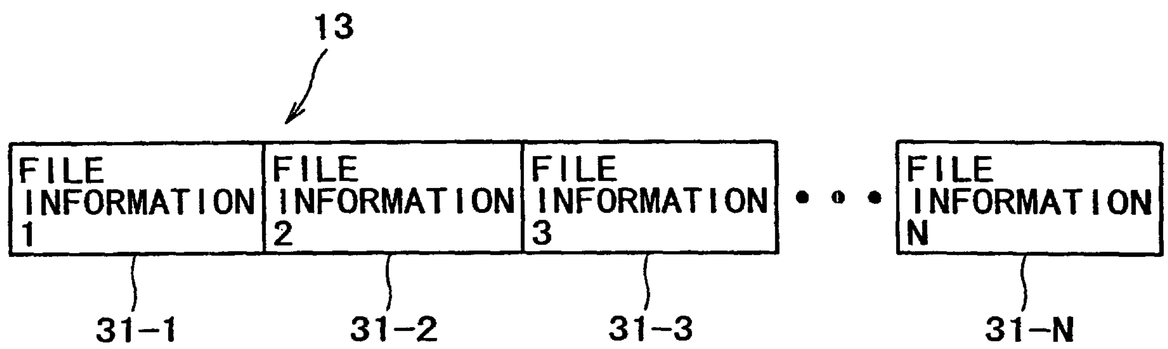
13
FILE INFORMATION 1
FILE INFORMATION 2
FILE INFORMATION 3
FILE INFORMATION N
31-1
31-2
31-3
31-N

F I G. 5

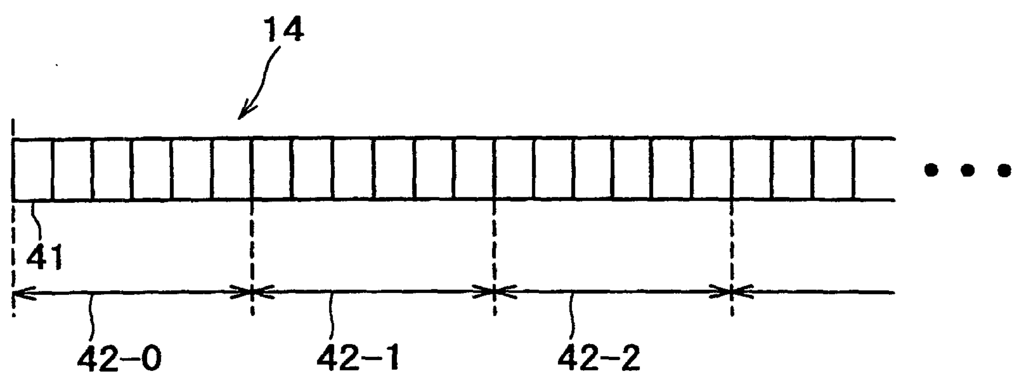
14
41
42-0
42-1
42-2

F I G. 6

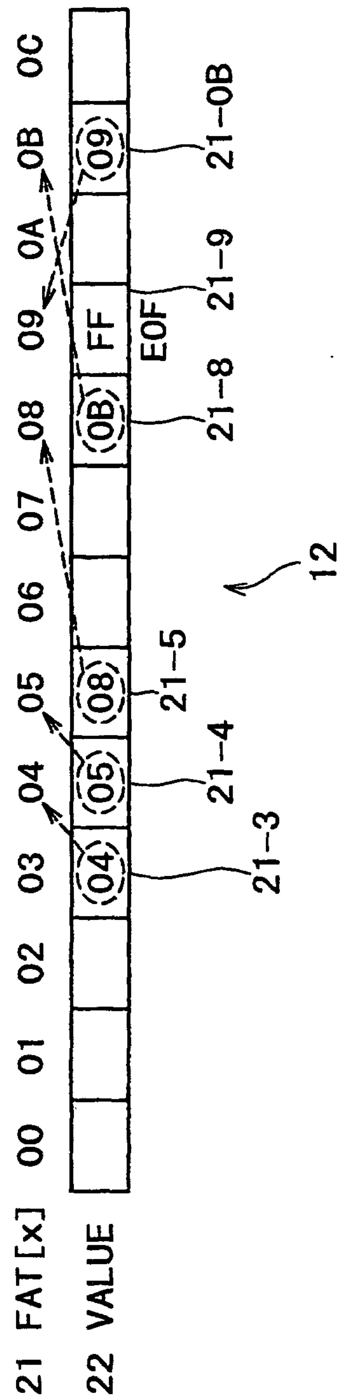
21 FAT[x]
22 VALUE
00
01
02
03
04
05
06
07
08
09
0A
0B
0C
04
05
08
0B
FF
09
EOF
21-3
21-4
21-5
21-8
21-9
21-0B
12

F I G. 7

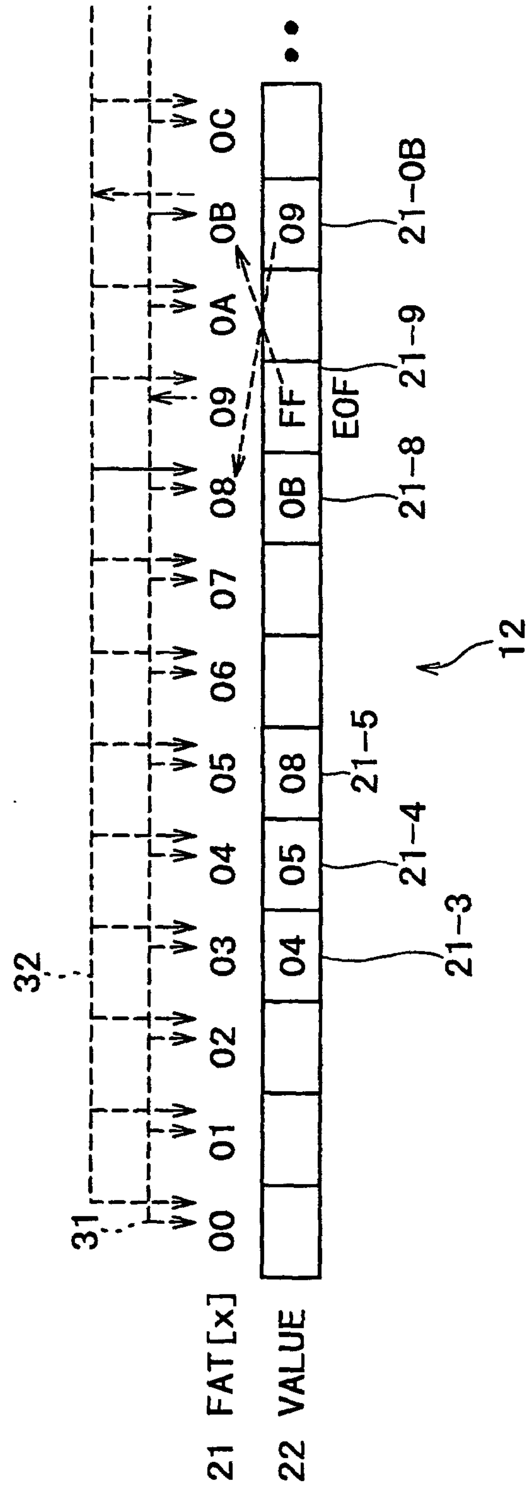
21 FAT[x]
22 VALUE
00
01
02
03
04
05
06
07
08
09
0A
0B
0C
04
05
08
0B
FF
09
EOF
31
32
21-3
21-4
21-5
21-8
21-9
21-0B
12

F I G. 8

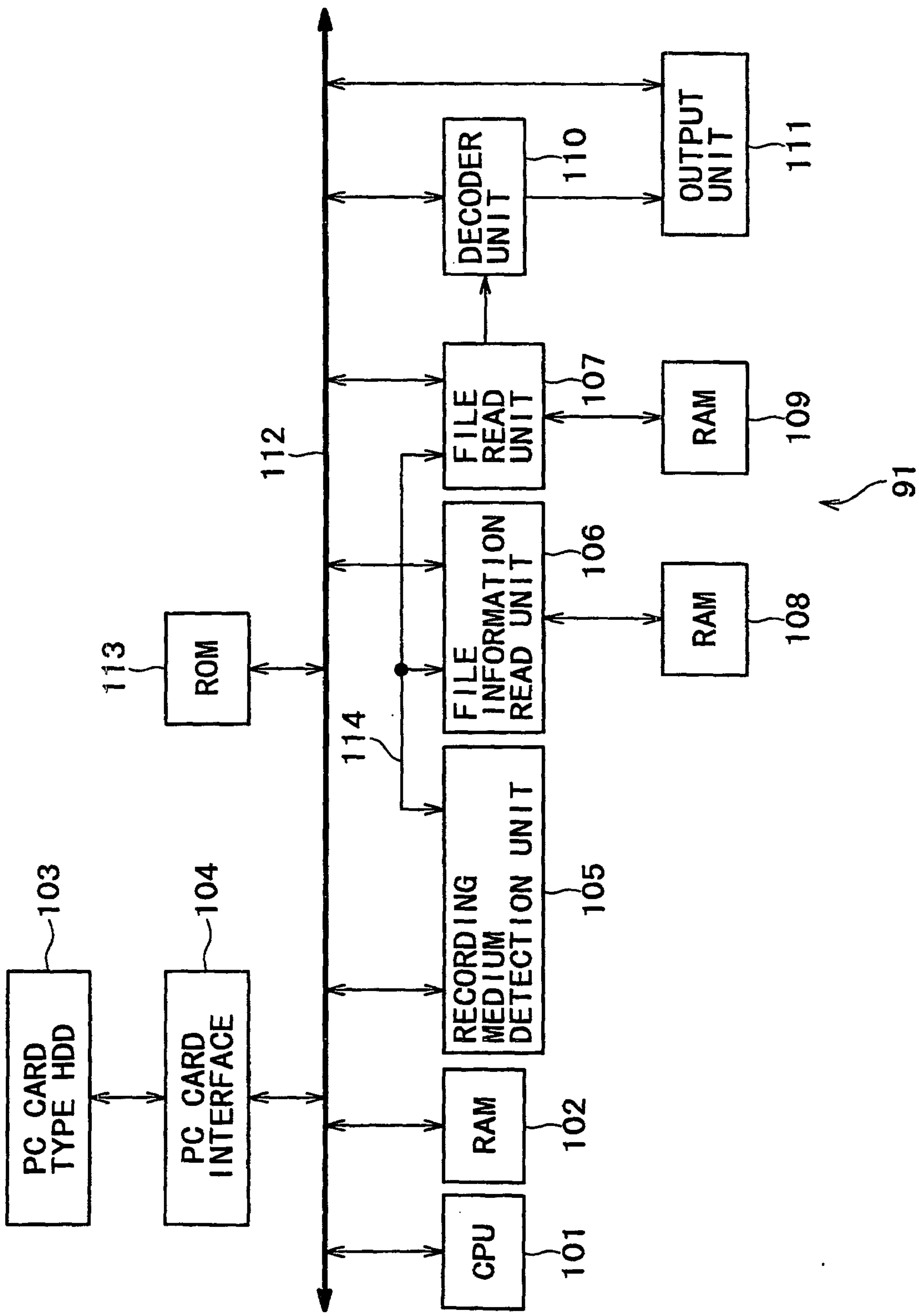
PC CARD TYPE HDD
103
PC CARD INTERFACE
104
ROM
113
112
114
CPU
101
RAM
102
RECORDING MEDIUM DETECTION UNIT
105
FILE INFORMATION READ UNIT
106
FILE READ UNIT
107
RAM
108
RAM
109
DECODER UNIT
110
OUTPUT UNIT
111
91

# F I G. 9

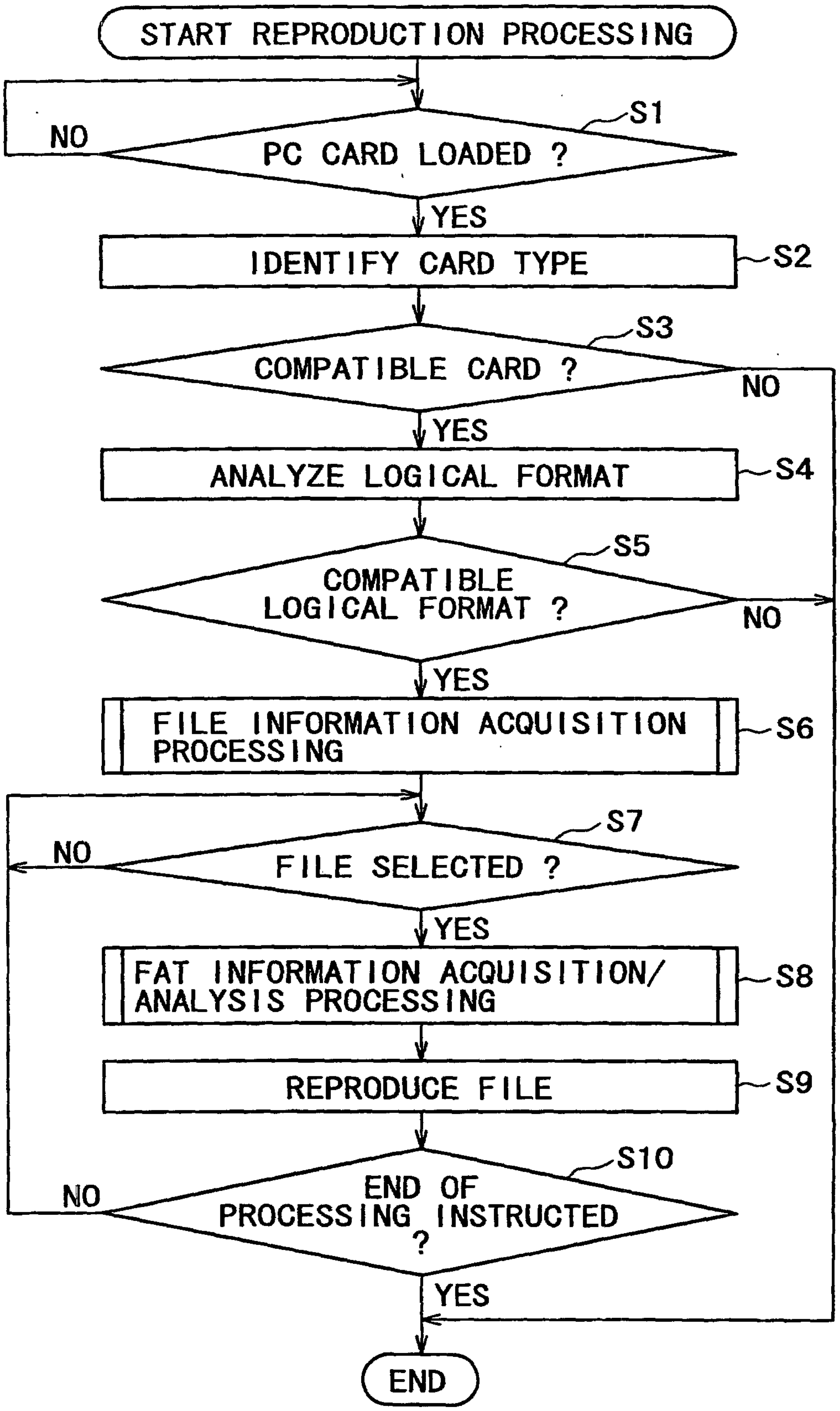
START REPRODUCTION PROCESSING
S1
PC CARD LOADED ?
NO
YES
IDENTIFY CARD TYPE
S2
S3
COMPATIBLE CARD ?
NO
YES
ANALYZE LOGICAL FORMAT
S4
S5
COMPATIBLE LOGICAL FORMAT ?
NO
YES
FILE INFORMATION ACQUISITION PROCESSING
S6
S7
FILE SELECTED ?
NO
YES
FAT INFORMATION ACQUISITION/ ANALYSIS PROCESSING
S8
REPRODUCE FILE
S9
S10
END OF PROCESSING INSTRUCTED ?
NO
YES
END

FIG. 10

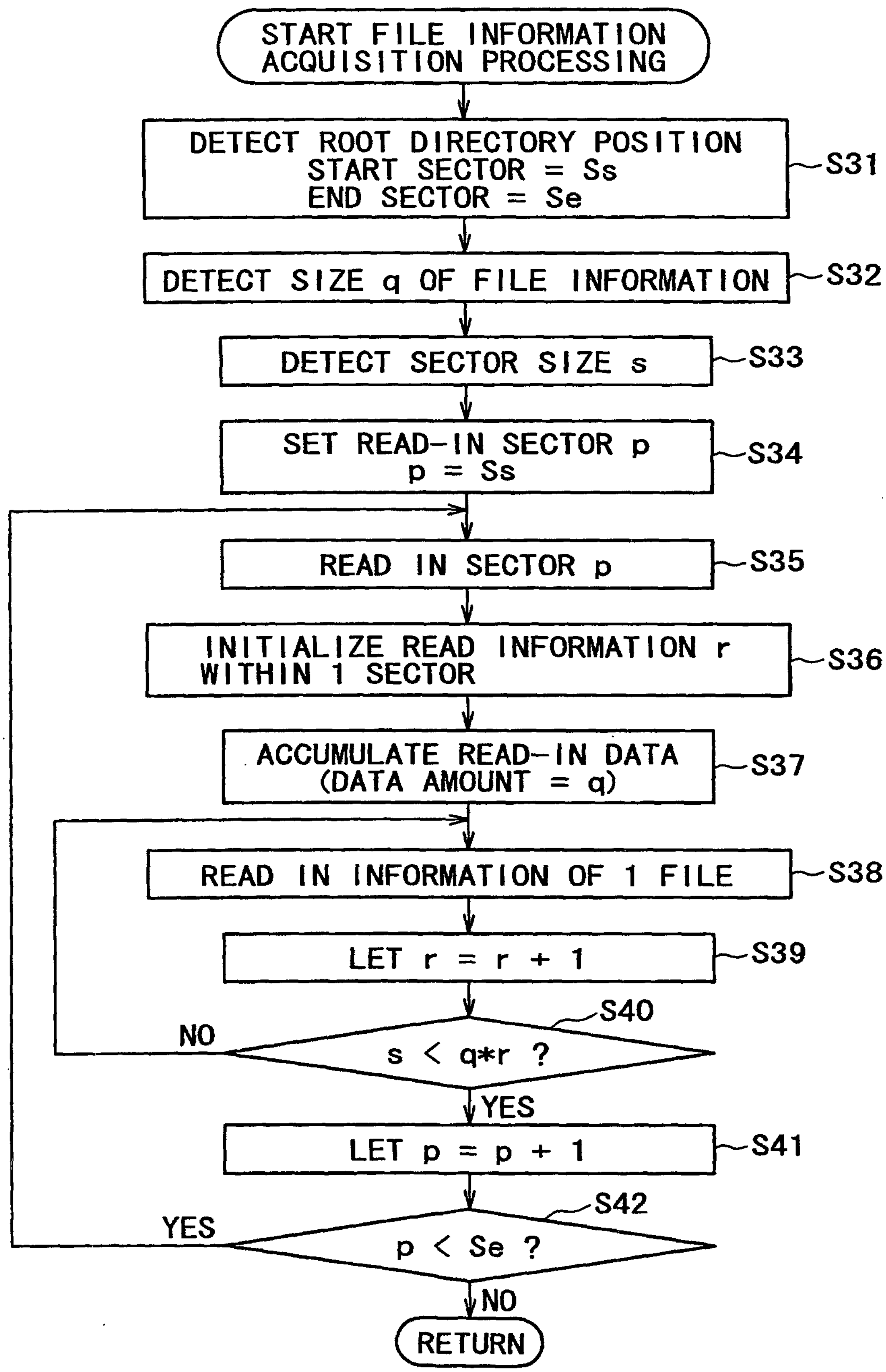
START FILE INFORMATION ACQUISITION PROCESSING
DETECT ROOT DIRECTORY POSITION
START SECTOR = Ss
END SECTOR = Se
S31
DETECT SIZE q OF FILE INFORMATION
S32
DETECT SECTOR SIZE s
S33
SET READ-IN SECTOR p
p = Ss
S34
READ IN SECTOR p
S35
INITIALIZE READ INFORMATION r WITHIN 1 SECTOR
S36
ACCUMULATE READ-IN DATA
(DATA AMOUNT = q)
S37
READ IN INFORMATION OF 1 FILE
S38
LET r = r + 1
S39
S40
NO
s < q*r ?
YES
LET p = p + 1
S41
S42
YES
p < Se ?
NO
RETURN

FIG. 11

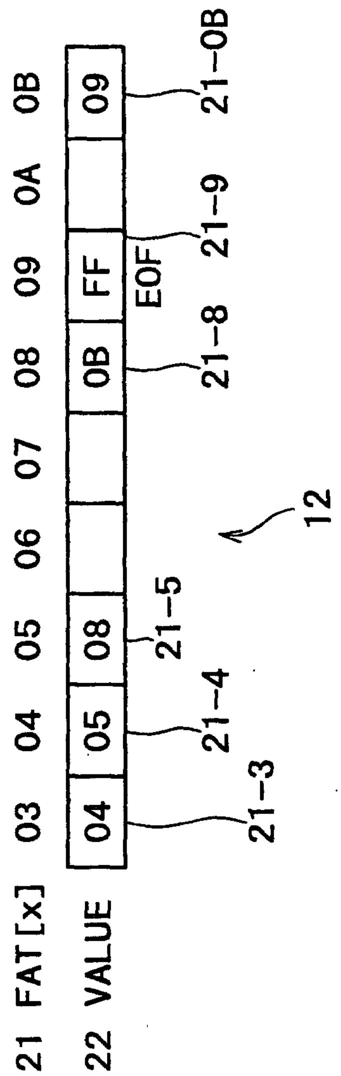
21 FAT[x]
22 VALUE
03
04
05
06
07
08
09
0A
0B
04
05
08
0B
FF
09
EOF
21-3
21-4
21-5
21-8
21-9
21-0B
12

F I G. 1 2

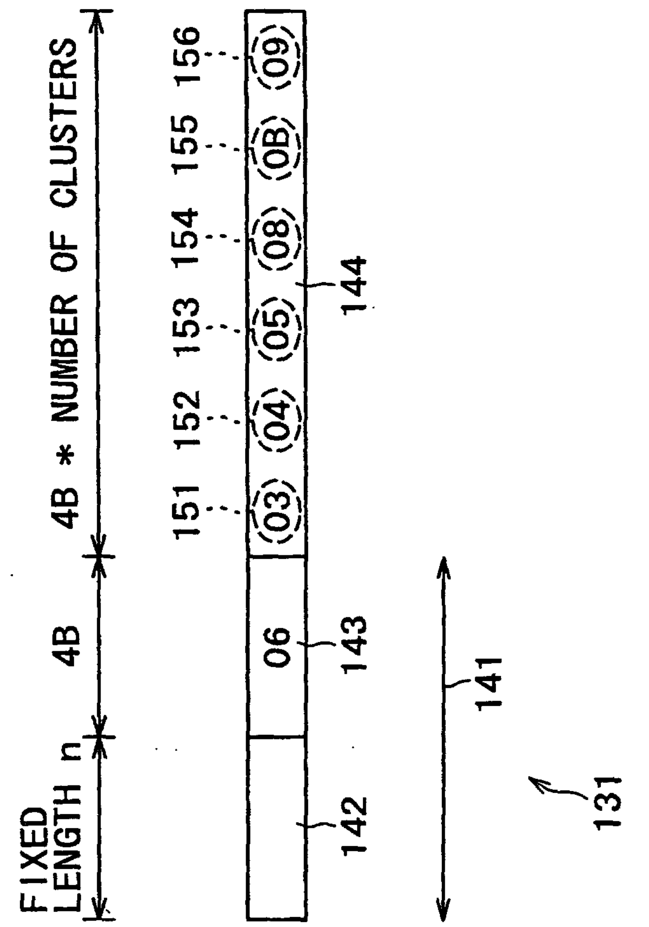
FIXED LENGTH n
4B
4B * NUMBER OF CLUSTERS
151
152
153
154
155
156
06
(03)
(04)
(05)
(08)
(0B)
(09)
142
143
144
141
131

FIG. 13

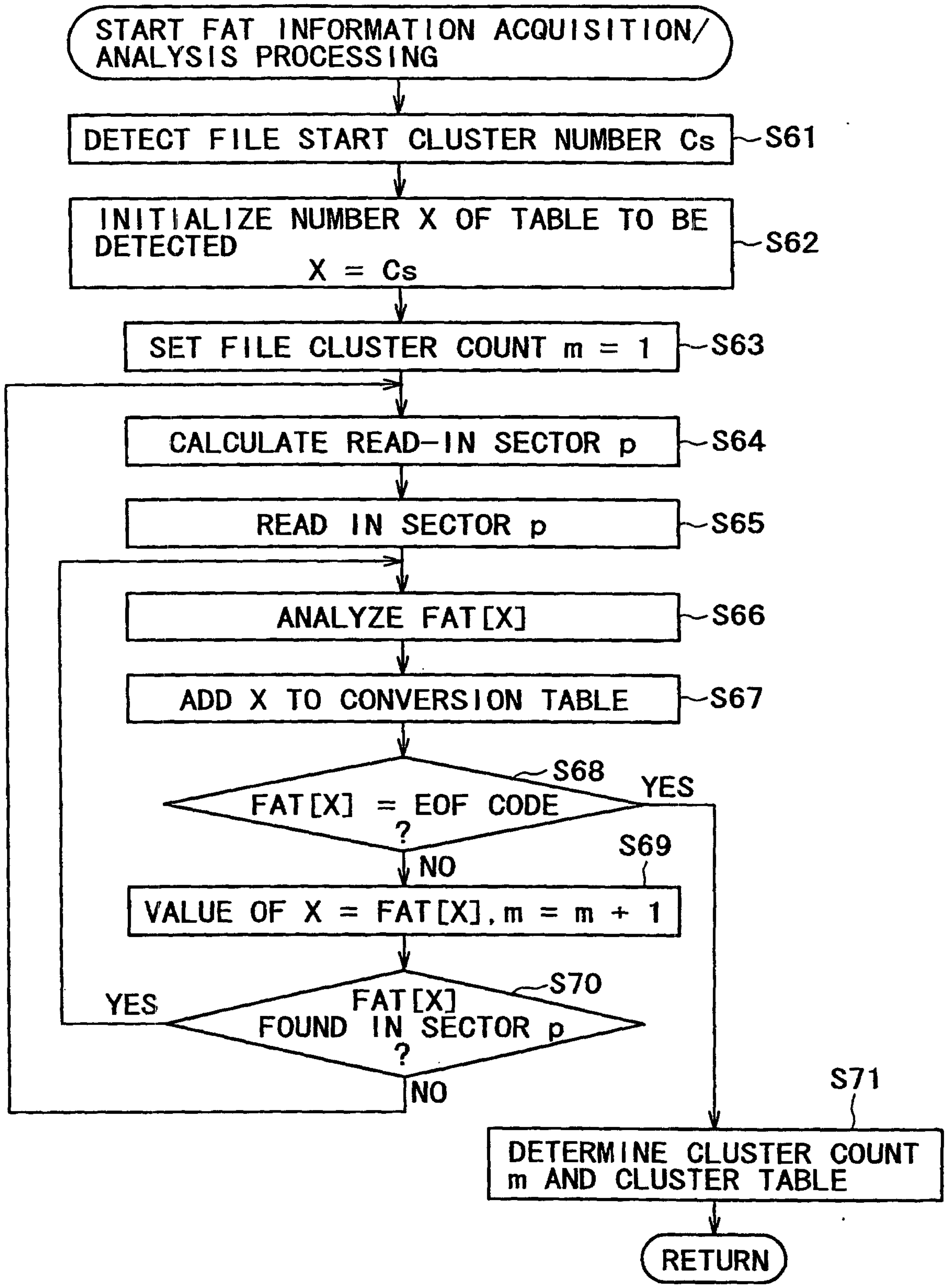
START FAT INFORMATION ACQUISITION/ ANALYSIS PROCESSING
DETECT FILE START CLUSTER NUMBER Cs
S61
INITIALIZE NUMBER X OF TABLE TO BE DETECTED X = Cs
S62
SET FILE CLUSTER COUNT m = 1
S63
CALCULATE READ-IN SECTOR p
S64
READ IN SECTOR p
S65
ANALYZE FAT[X]
S66
ADD X TO CONVERSION TABLE
S67
FAT[X] = EOF CODE ?
S68
YES
NO
VALUE OF X = FAT[X], m = m + 1
S69
FAT[X] FOUND IN SECTOR p ?
S70
YES
NO
DETERMINE CLUSTER COUNT m AND CLUSTER TABLE
S71
RETURN

FIG. 14

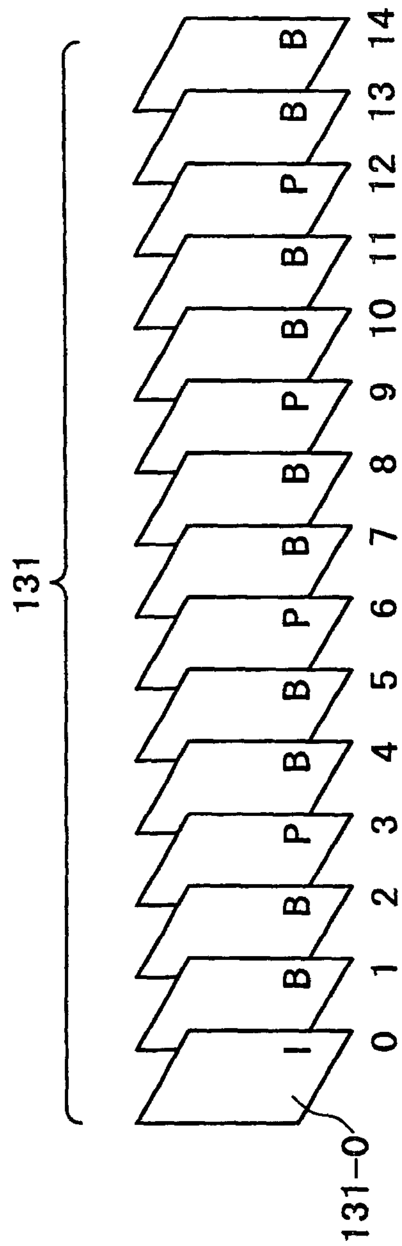

FIG. 15

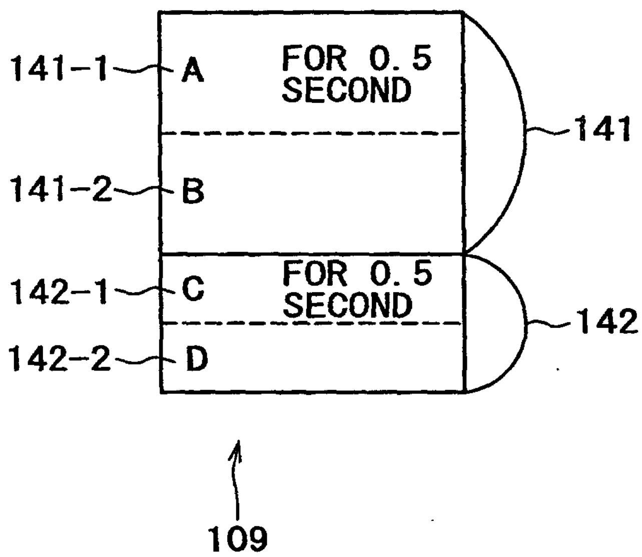
141-1
A
FOR 0.5
SECOND
141-2
B
141
142-1
C
FOR 0.5
SECOND
142-2
D
142
109

FIG. 16

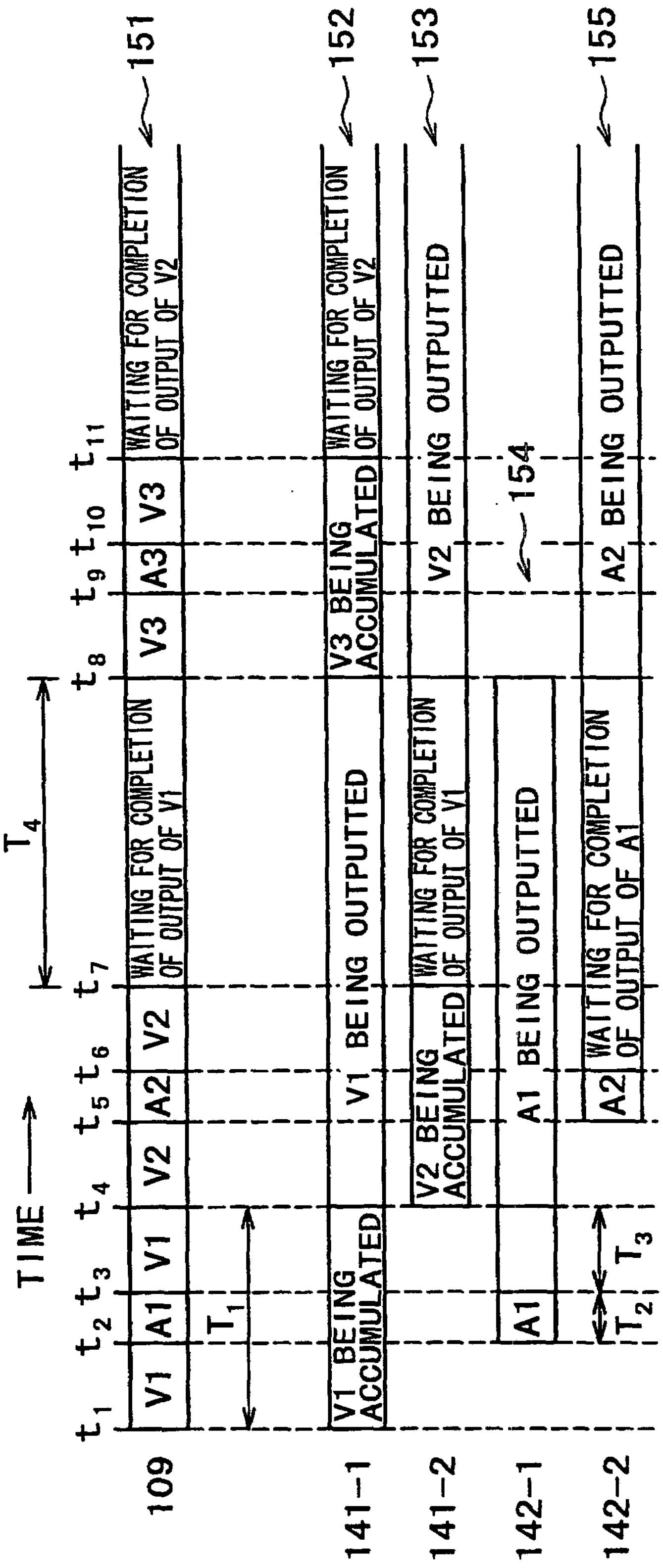
TIME
$t_1$
$t_2$
$t_3$
$t_4$
$t_5$
$t_6$
$t_7$
$t_8$
$t_9$
$t_{10}$
$t_{11}$
$T_1$
$T_2$
$T_3$
$T_4$
109
141-1
141-2
142-1
142-2
151
152
153
154
155
V1
A1
V1
V2
A2
V2
WAITING FOR COMPLETION OF OUTPUT OF V1
V3
A3
V3
WAITING FOR COMPLETION OF OUTPUT OF V2
V1 BEING ACCUMULATED
V1 BEING OUTPUTTED
V3 BEING ACCUMULATED
WAITING FOR COMPLETION OF OUTPUT OF V2
V2 BEING ACCUMULATED
WAITING FOR COMPLETION OF OUTPUT OF V1
V2 BEING OUTPUTTED
A1
A1 BEING OUTPUTTED
A2
WAITING FOR COMPLETION OF OUTPUT OF A1
A2 BEING OUTPUTTED

F I G. 1 7

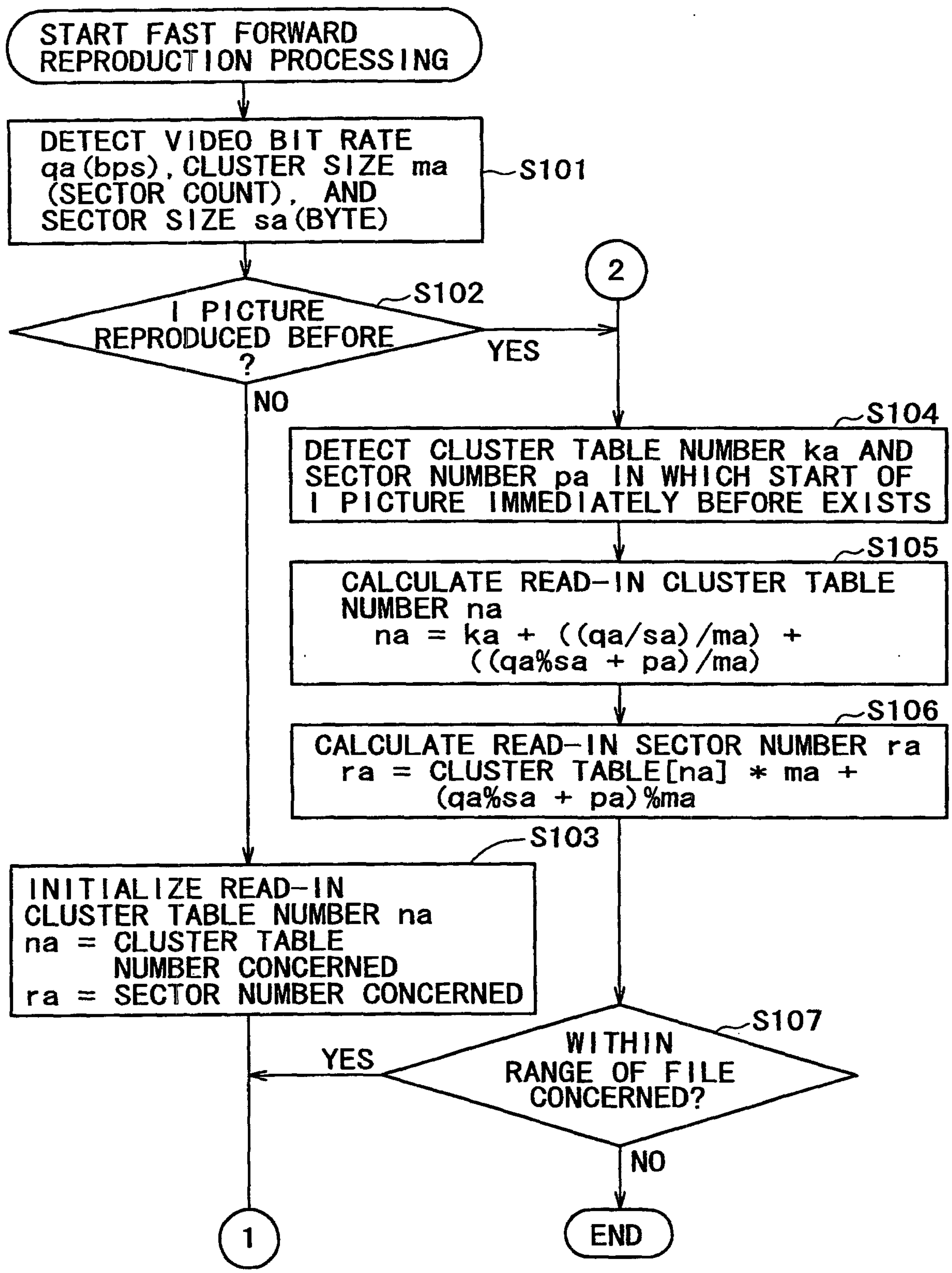
START FAST FORWARD REPRODUCTION PROCESSING
DETECT VIDEO BIT RATE qa (bps), CLUSTER SIZE ma (SECTOR COUNT), AND SECTOR SIZE sa (BYTE)
S101
I PICTURE REPRODUCED BEFORE ?
S102
YES
NO
2
S104
DETECT CLUSTER TABLE NUMBER ka AND SECTOR NUMBER pa IN WHICH START OF I PICTURE IMMEDIATELY BEFORE EXISTS
S105
CALCULATE READ-IN CLUSTER TABLE NUMBER na
na = ka + ((qa/sa)/ma) + ((qa%sa + pa)/ma)
S106
CALCULATE READ-IN SECTOR NUMBER ra
ra = CLUSTER TABLE[na] * ma + (qa%sa + pa)%ma
S103
INITIALIZE READ-IN CLUSTER TABLE NUMBER na
na = CLUSTER TABLE NUMBER CONCERNED
ra = SECTOR NUMBER CONCERNED
S107
WITHIN RANGE OF FILE CONCERNED?
YES
NO
1
END

F I G. 1 8

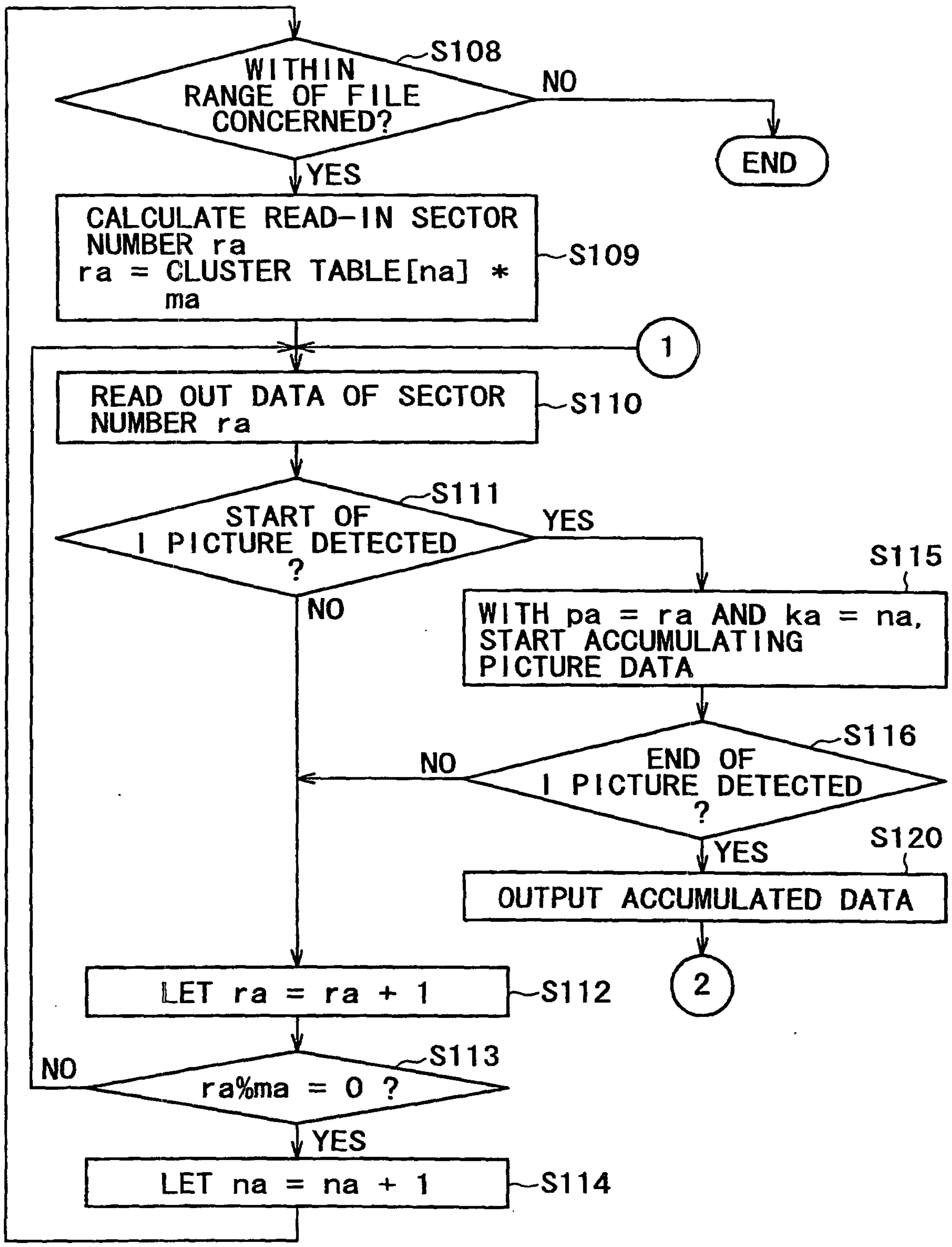
WITHIN RANGE OF FILE CONCERNED?
S108
NO
END
YES
CALCULATE READ-IN SECTOR NUMBER ra
ra = CLUSTER TABLE[na] * ma
S109
1
READ OUT DATA OF SECTOR NUMBER ra
S110
START OF I PICTURE DETECTED ?
S111
YES
NO
S115
WITH pa = ra AND ka = na, START ACCUMULATING PICTURE DATA
END OF I PICTURE DETECTED ?
S116
NO
YES
S120
OUTPUT ACCUMULATED DATA
2
LET ra = ra + 1
S112
ra%ma = 0 ?
S113
NO
YES
LET na = na + 1
S114

FIG. 19

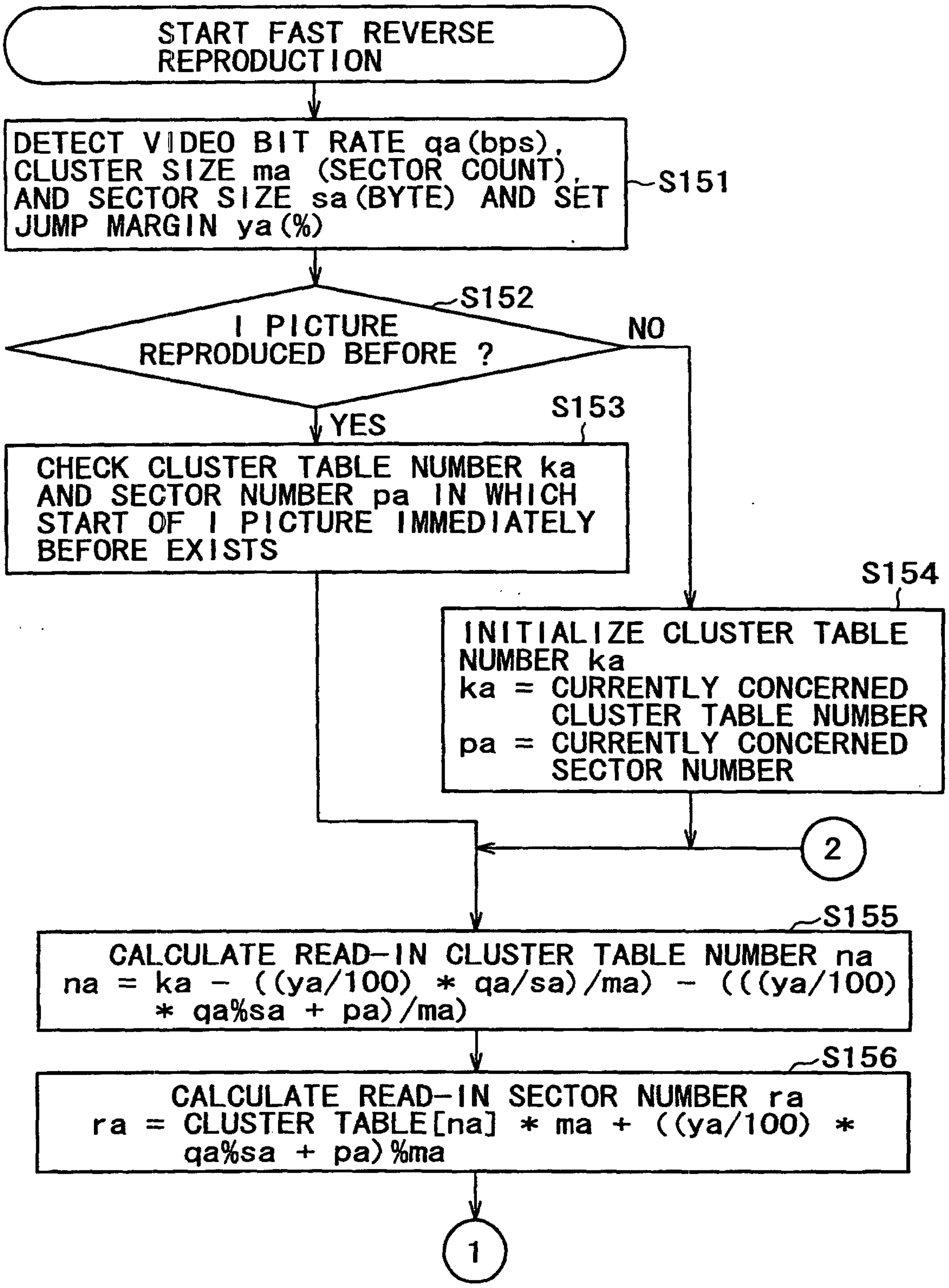
START FAST REVERSE REPRODUCTION
DETECT VIDEO BIT RATE qa(bps), CLUSTER SIZE ma (SECTOR COUNT), AND SECTOR SIZE sa(BYTE) AND SET JUMP MARGIN ya(%)
S151
S152
I PICTURE REPRODUCED BEFORE ?
NO
YES
S153
CHECK CLUSTER TABLE NUMBER ka AND SECTOR NUMBER pa IN WHICH START OF I PICTURE IMMEDIATELY BEFORE EXISTS
S154
INITIALIZE CLUSTER TABLE NUMBER ka
ka = CURRENTLY CONCERNED CLUSTER TABLE NUMBER
pa = CURRENTLY CONCERNED SECTOR NUMBER
2
S155
CALCULATE READ-IN CLUSTER TABLE NUMBER na
na = ka - ((ya/100) * qa/sa)/ma) - (((ya/100) * qa%sa + pa)/ma)
S156
CALCULATE READ-IN SECTOR NUMBER ra
ra = CLUSTER TABLE[na] * ma + ((ya/100) * qa%sa + pa)%ma
1

F I G. 2 0

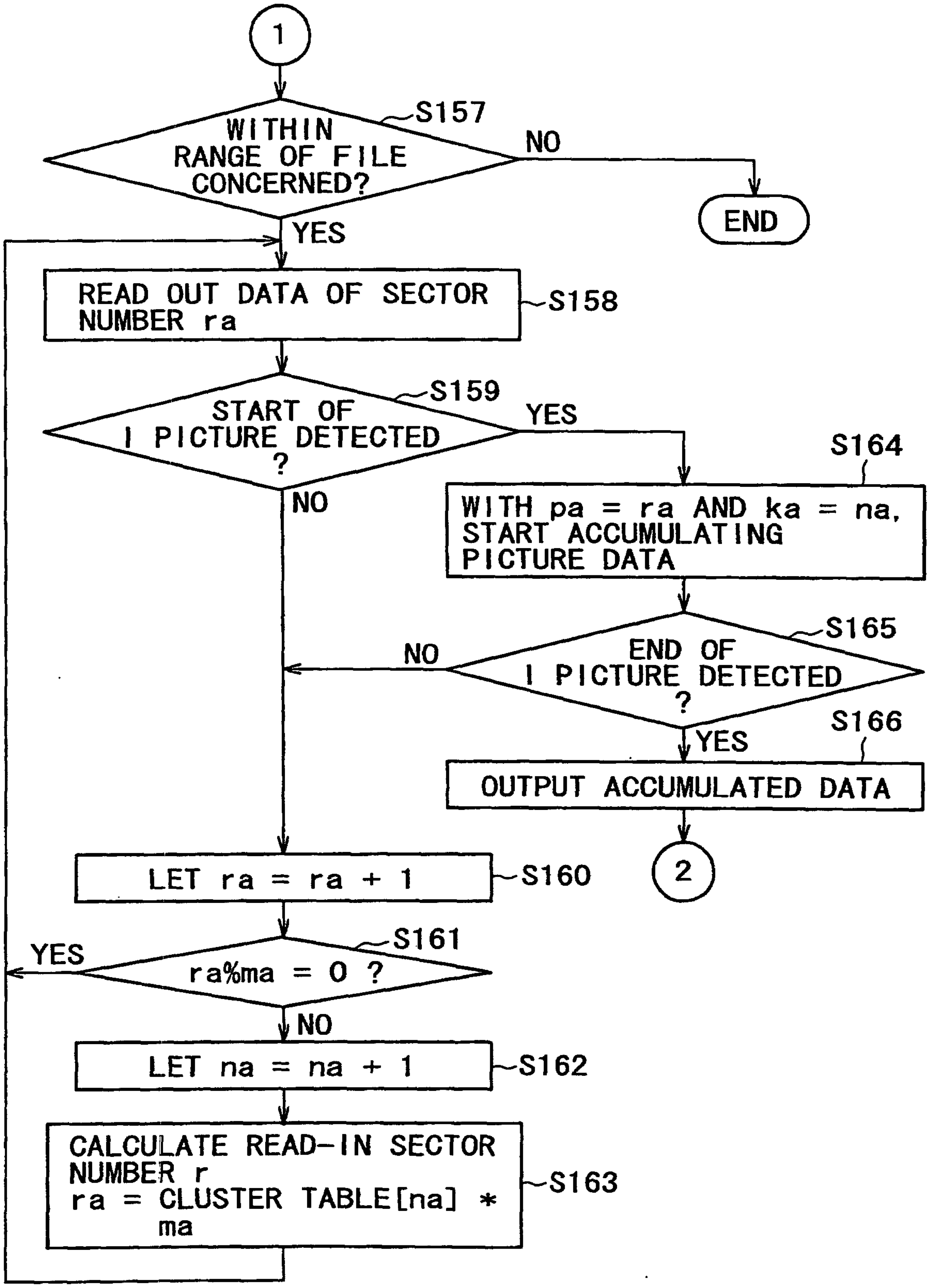
1
WITHIN RANGE OF FILE CONCERNED?
S157
NO
END
YES
READ OUT DATA OF SECTOR NUMBER ra
S158
START OF I PICTURE DETECTED ?
S159
YES
NO
S164
WITH pa = ra AND ka = na, START ACCUMULATING PICTURE DATA
END OF I PICTURE DETECTED ?
S165
NO
YES
S166
OUTPUT ACCUMULATED DATA
2
LET ra = ra + 1
S160
ra%ma = 0 ?
S161
YES
NO
LET na = na + 1
S162
CALCULATE READ-IN SECTOR NUMBER r
ra = CLUSTER TABLE[na] * ma
S163

FIG. 21

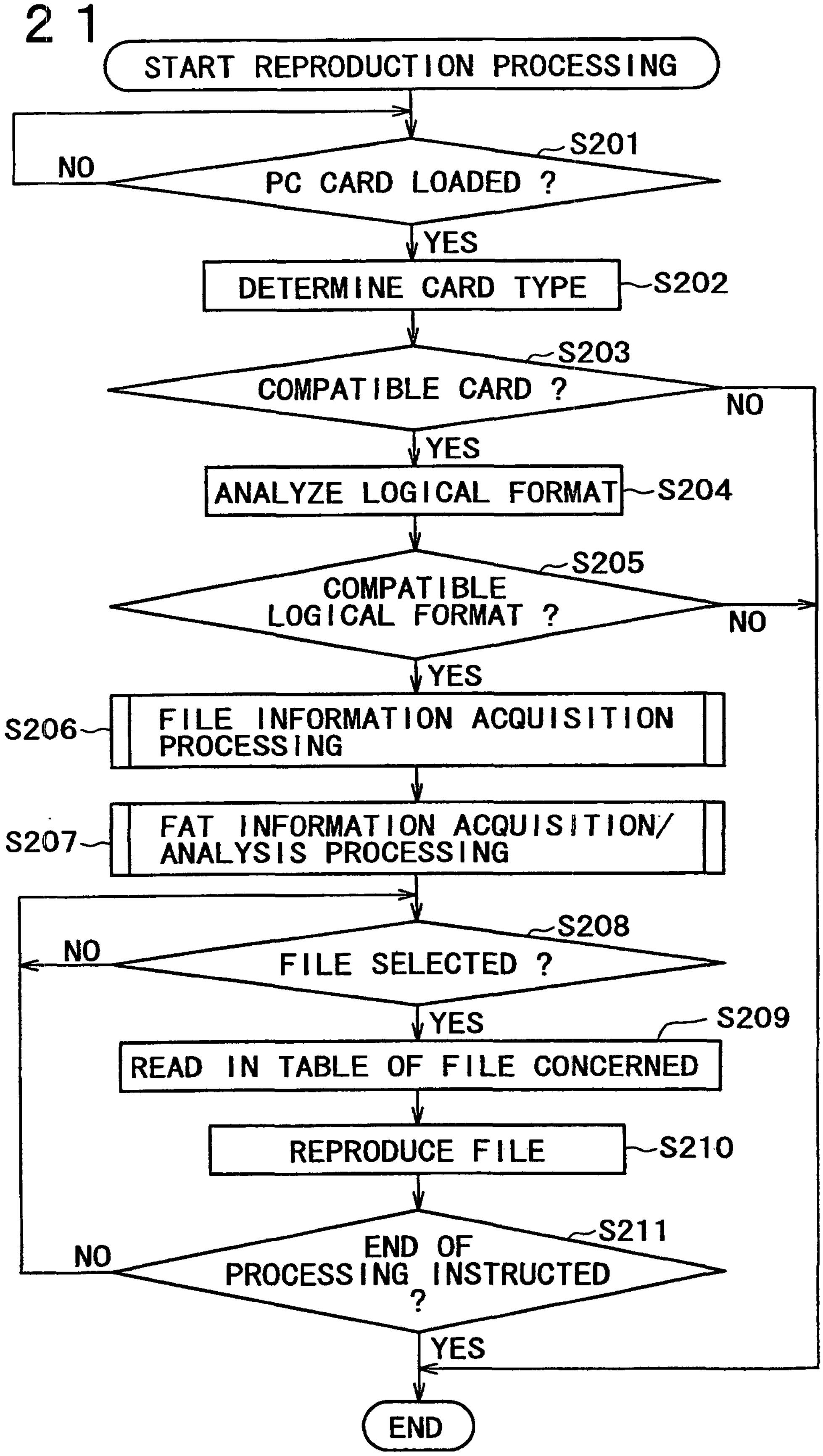
START REPRODUCTION PROCESSING
S201
PC CARD LOADED ?
NO
YES
DETERMINE CARD TYPE
S202
S203
COMPATIBLE CARD ?
NO
YES
ANALYZE LOGICAL FORMAT
S204
S205
COMPATIBLE LOGICAL FORMAT ?
NO
YES
S206
FILE INFORMATION ACQUISITION PROCESSING
S207
FAT INFORMATION ACQUISITION/ ANALYSIS PROCESSING
S208
FILE SELECTED ?
NO
YES
S209
READ IN TABLE OF FILE CONCERNED
REPRODUCE FILE
S210
S211
END OF PROCESSING INSTRUCTED ?
NO
YES
END

FIG. 22

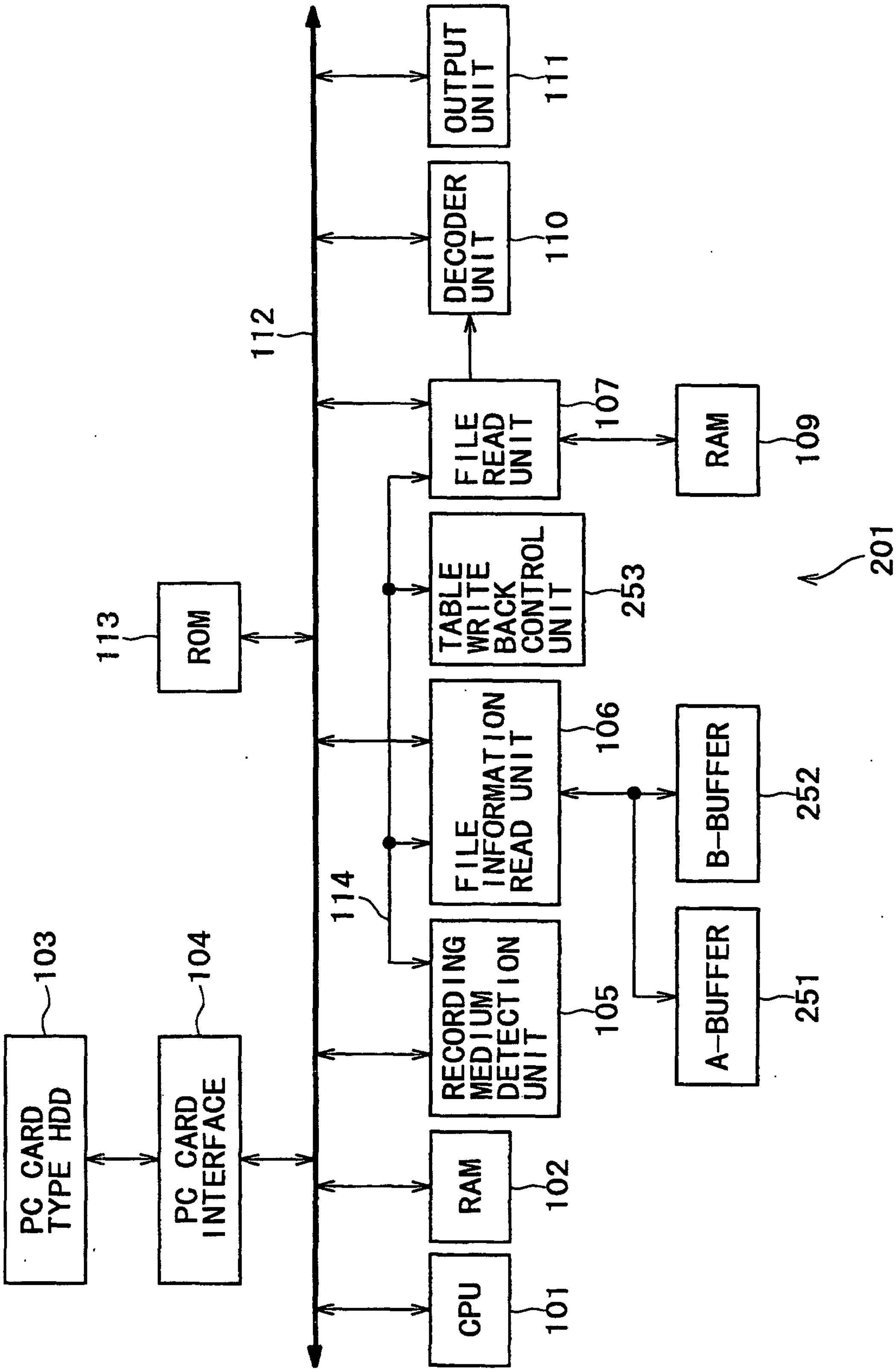
PC CARD TYPE HDD
103
PC CARD INTERFACE
104
ROM
113
112
114
CPU
101
RAM
102
RECORDING MEDIUM DETECTION UNIT
105
FILE INFORMATION READ UNIT
106
TABLE WRITE BACK CONTROL UNIT
253
FILE READ UNIT
107
DECODER UNIT
110
OUTPUT UNIT
111
RAM
109
A-BUFFER
251
B-BUFFER
252
201

F I G. 2 3

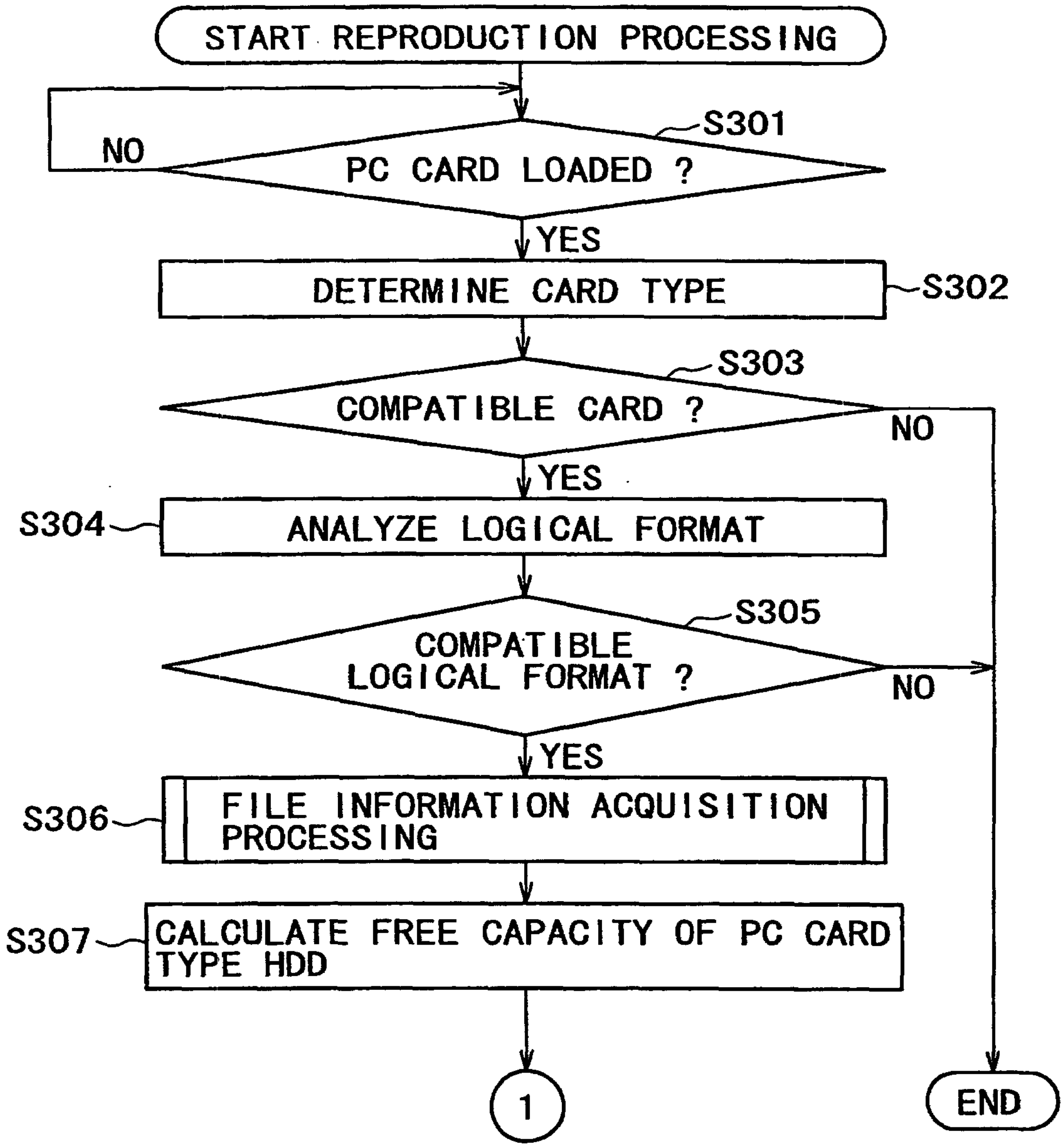
START REPRODUCTION PROCESSING
S301
NO
PC CARD LOADED ?
YES
DETERMINE CARD TYPE
S302
S303
COMPATIBLE CARD ?
NO
YES
S304
ANALYZE LOGICAL FORMAT
S305
COMPATIBLE LOGICAL FORMAT ?
NO
YES
S306
FILE INFORMATION ACQUISITION PROCESSING
S307
CALCULATE FREE CAPACITY OF PC CARD TYPE HDD
1
END

FIG. 24

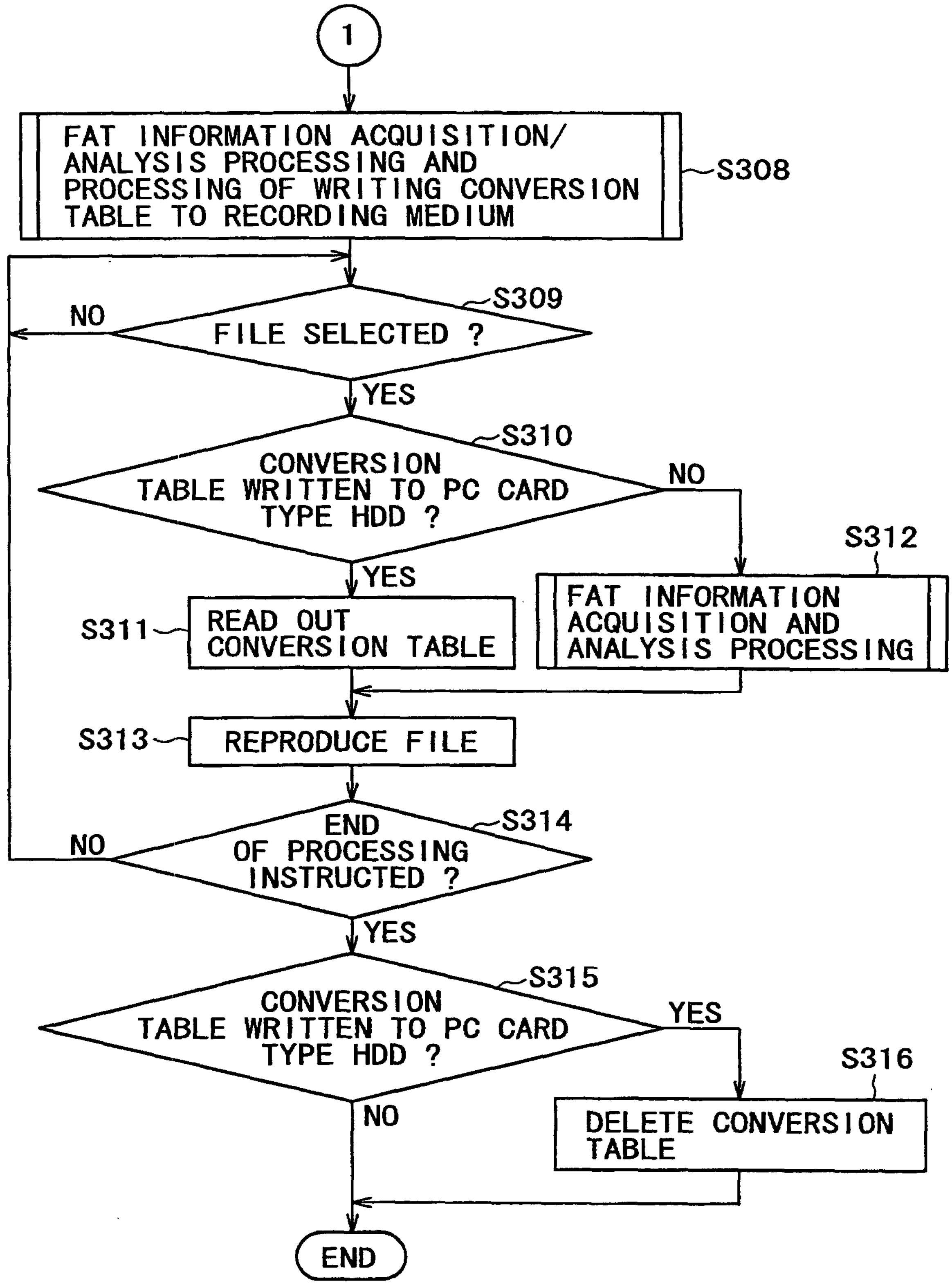
1
FAT INFORMATION ACQUISITION/ ANALYSIS PROCESSING AND PROCESSING OF WRITING CONVERSION TABLE TO RECORDING MEDIUM
S308
S309
FILE SELECTED ?
NO
YES
S310
CONVERSION TABLE WRITTEN TO PC CARD TYPE HDD ?
NO
YES
S311
READ OUT CONVERSION TABLE
S312
FAT INFORMATION ACQUISITION AND ANALYSIS PROCESSING
S313
REPRODUCE FILE
S314
END OF PROCESSING INSTRUCTED ?
NO
YES
S315
CONVERSION TABLE WRITTEN TO PC CARD TYPE HDD ?
YES
NO
S316
DELETE CONVERSION TABLE
END

FIG. 25

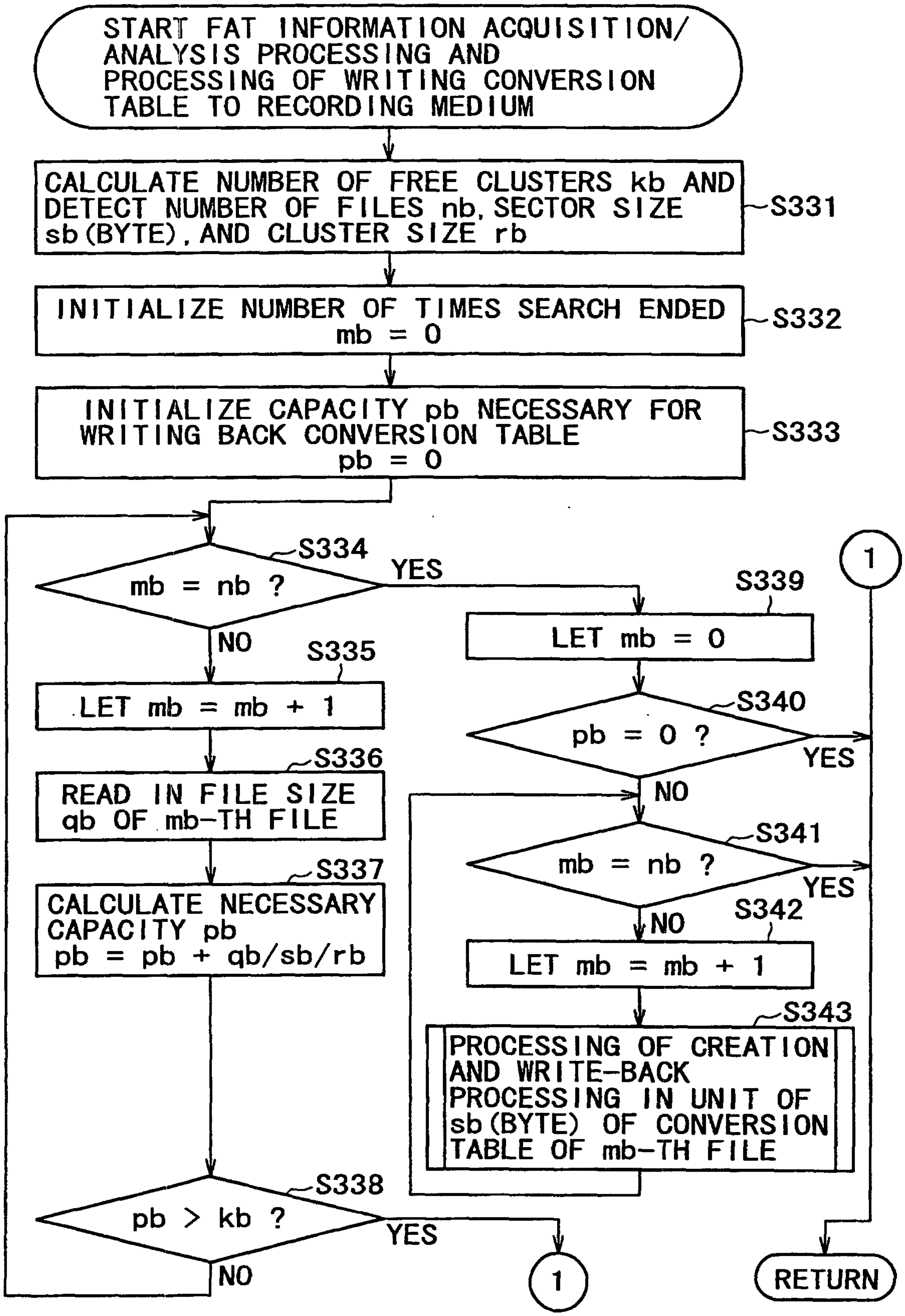
START FAT INFORMATION ACQUISITION/ ANALYSIS PROCESSING AND PROCESSING OF WRITING CONVERSION TABLE TO RECORDING MEDIUM
CALCULATE NUMBER OF FREE CLUSTERS kb AND DETECT NUMBER OF FILES nb, SECTOR SIZE sb (BYTE), AND CLUSTER SIZE rb
S331
INITIALIZE NUMBER OF TIMES SEARCH ENDED mb = 0
S332
INITIALIZE CAPACITY pb NECESSARY FOR WRITING BACK CONVERSION TABLE pb = 0
S333
S334
mb = nb ?
YES
NO
S335
LET mb = mb + 1
S336
READ IN FILE SIZE qb OF mb-TH FILE
S337
CALCULATE NECESSARY CAPACITY pb
pb = pb + qb/sb/rb
S338
pb > kb ?
YES
NO
1
S339
LET mb = 0
S340
pb = 0 ?
YES
NO
S341
mb = nb ?
YES
NO
S342
LET mb = mb + 1
S343
PROCESSING OF CREATION AND WRITE-BACK PROCESSING IN UNIT OF sb (BYTE) OF CONVERSION TABLE OF mb-TH FILE
1
RETURN

F I G. 2 6

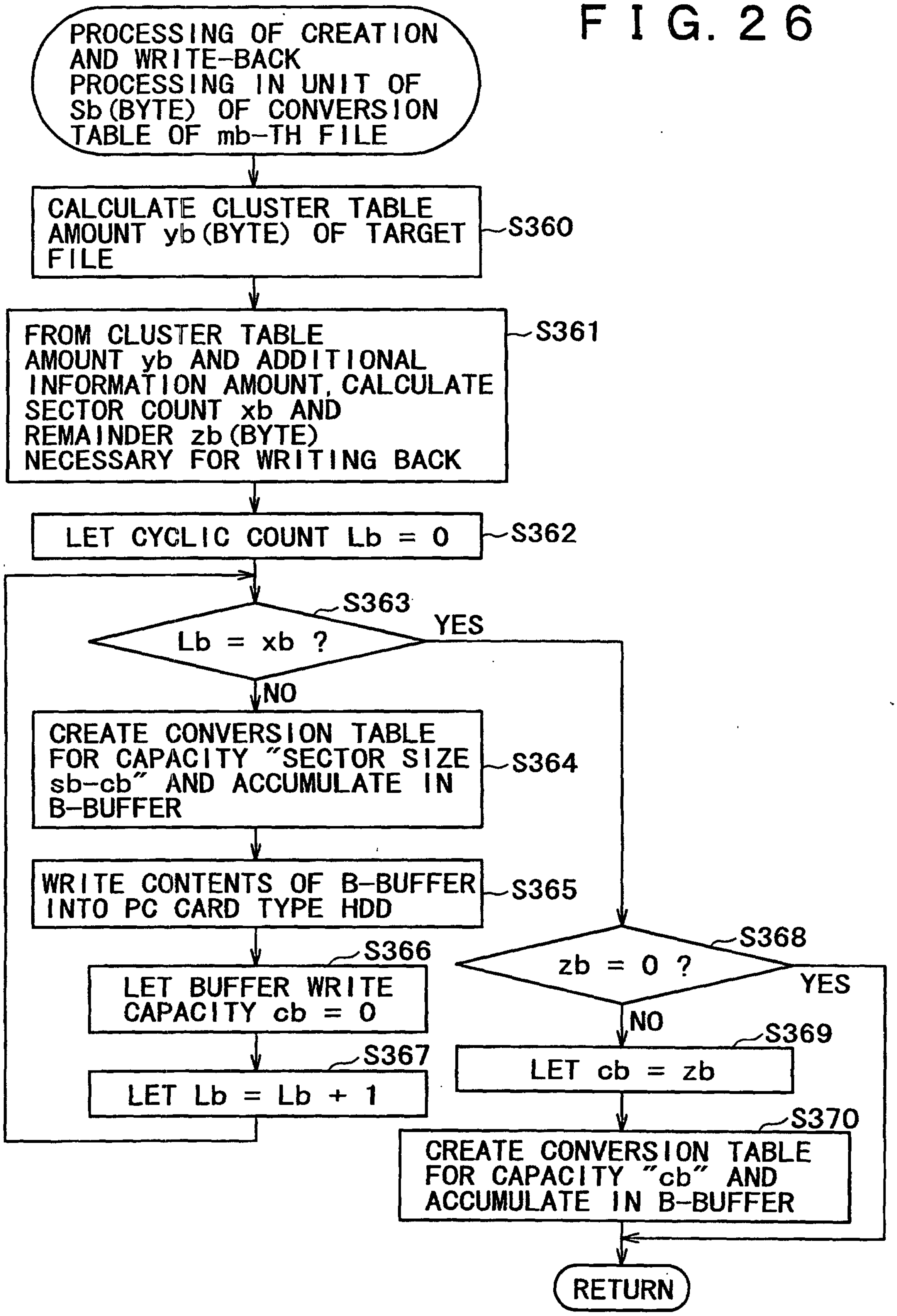
PROCESSING OF CREATION AND WRITE-BACK PROCESSING IN UNIT OF Sb (BYTE) OF CONVERSION TABLE OF mb-TH FILE
CALCULATE CLUSTER TABLE AMOUNT yb (BYTE) OF TARGET FILE
S360
FROM CLUSTER TABLE AMOUNT yb AND ADDITIONAL INFORMATION AMOUNT, CALCULATE SECTOR COUNT xb AND REMAINDER zb (BYTE) NECESSARY FOR WRITING BACK
S361
LET CYCLIC COUNT Lb = 0
S362
S363
Lb = xb ?
YES
NO
CREATE CONVERSION TABLE FOR CAPACITY "SECTOR SIZE sb-cb" AND ACCUMULATE IN B-BUFFER
S364
WRITE CONTENTS OF B-BUFFER INTO PC CARD TYPE HDD
S365
S366
LET BUFFER WRITE CAPACITY cb = 0
S367
LET Lb = Lb + 1
S368
zb = 0 ?
YES
NO
S369
LET cb = zb
S370
CREATE CONVERSION TABLE FOR CAPACITY "cb" AND ACCUMULATE IN B-BUFFER
RETURN

**INTERNATIONAL SEARCH REPORT**

International application No.
PCT/JP03/00054

A. CLASSIFICATION OF SUBJECT MATTER
Int.Cl[7] G06F12/00, G11B27/10, 27/00, H04N5/91, 5/93

According to International Patent Classification (IPC) or to both national classification and IPC

B. FIELDS SEARCHED

Minimum documentation searched (classification system followed by classification symbols)
Int.Cl[7] G06F12/00, G11B27/10, 27/00, H04N5/91, 5/93

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2001-236251 A (Fujitsu Ltd.), 31 August, 2001 (31.08.01), Full text; all drawings (Family: none) | 1-11 |
| X | JP 10-228400 A (Zexel Corp.), 25 August, 1998 (25.08.98), Full text; all drawings & CA 2215540 A & GB 2319639 A & FR 2756394 A & US 6058390 A | 1-11 |
| A | JP 10-301825 A (Olympus Optical Co., Ltd.), 13 November, 1998 (13.11.98), Full text; all drawings (Family: none) | 1-11 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 April, 2003 (03.04.03) | 15 April, 2003 (15.04.03) |
| Name and mailing address of the ISA/ Japanese Patent Office | Authorized officer |
| Facsimile No. | Telephone No. |

Form PCT/ISA/210 (second sheet) (July 1998)